(19) Europäisches Patentamt
European Patent Office
Office européen des brevets

(11) EP 4 508 141 B1

(12) EUROPÄISCHE PATENTSCHRIFT

(45) Veröffentlichungstag und Bekanntmachung des Hinweises auf die Patenterteilung:
**25.02.2026 Patentblatt 2026/09**

(21) Anmeldenummer: **23718740.6**

(22) Anmeldetag: **06.04.2023**

(51) Internationale Patentklassifikation (IPC):
***C08L 69/00*** *(2006.01)*

(52) Gemeinsame Patentklassifikation (CPC):
(C-Sets verfügbar)
**C08L 69/00** (Forts.)

(86) Internationale Anmeldenummer:
**PCT/EP2023/059150**

(87) Internationale Veröffentlichungsnummer:
**WO 2023/198594 (19.10.2023 Gazette 2023/42)**

# (54) FLAMMGESCHÜTZTE, THERMISCH LEITFÄHIGE POLYCARBONAT-ZUSAMMENSETZUNGEN MIT HOHER KRIECHSTROMFESTIGKEIT

FLAME-RETARDANT, THERMALLY CONDUCTIVE POLYCARBONATE COMPOSITIONS WITH HIGH TRACKING RESISTANCE

COMPOSITIONS DE POLYCARBONATE THERMOCONDUCTRICES IGNIFUGES À RÉSISTANCE ÉLEVÉE À LA FISSURATION

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **14.04.2022 EP 22168335**

(43) Veröffentlichungstag der Anmeldung:
**19.02.2025 Patentblatt 2025/08**

(73) Patentinhaber: **Covestro Deutschland AG**
**51373 Leverkusen (DE)**

(72) Erfinder:
- **HUNGERLAND, Tim**
**51063 Köln (DE)**
- **NOLTE, Marius**
**50933 Köln (DE)**
- **KNAUPP, Matthias**
**40764 Langenfeld (DE)**

(74) Vertreter: **Levpat**
**c/o Covestro AG**
**Gebäude K12**
**51365 Leverkusen (DE)**

(56) Entgegenhaltungen:
**WO-A1-2020/212245**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)

C-Sets
**C08L 69/00, C08K 3/34, C08K 5/5399, C08L 27/18, C08L 23/28**

## Beschreibung

Die Erfindung betrifft thermisch leitfähige, flammgeschützte thermoplastische Zusammensetzungen auf Basis von Polycarbonat mit hoher Kriechstromfestigkeit.

Polycarbonat bietet aufgrund seiner hohen Schlagzähigkeit, der hohen Wärmeformbeständigkeit und einer gewissen inhärenten Flammwidrigkeit viele Vorteile gegenüber anderen thermoplastischen Polymeren. Aufgrund dieses einzigartigen Eigenschaftsprofils eignen sich Polycarbonat-Zusammensetzungen grundsätzlich für eine Vielzahl unterschiedlicher Anwendungen, z.B. im Bereich elektrischer und elektronischer Bauteile. Dabei sind insbesondere gute Isoliereigenschaften und hohe Flammwidrigkeit wesentliche sicherheitsrelevante Grundanforderungen an eingesetzte Materialien in diesem Bereich.

In Anwendungen, bei denen der Kunststoff in direktem Kontakt zu den elektrischen Leiterbahnen ist, wird eine hohe Resistenz gegenüber Kriechströmen unter Spannungslast vorausgesetzt, damit es innerhalb des Bauteils nicht zu Kurzschlüssen und damit zum Brand kommt. Kriechstromfestigkeit (CTI, "comparative tracking index") beschreibt im Allgemeinen die Widerstandsfähigkeit eines Kunststoffmaterials gegenüber Umwelteinflüssen. Der CTI-Wert ist dabei ein Maß für die Neigung eines Kunststoffes, unter Umwelteinflüssen, wie z.B. Feuchtigkeit und Verschmutzungen, unter Spannung elektrisch leitfähige Pfade an der Oberfläche auszubilden und daraus resultierende elektrische Kriechströme zu begünstigen. Je höher der Kriechstromwiderstand bzw. die Kriechstromfestigkeit (der CTI-Wert) eines Materials ist, desto besser eignet es sich für den Einsatz in Hochspannungsanwendungen, z.B. in Anwendungen der heutigen Elektromobilität. Ein weiterer Vorteil von Materialien mit hohem CTI-Wert ist die Möglichkeit, dass elektrische Leiterbahnen in einem elektronischen Bauteil näher beieinanderliegen können, ohne einen Kurzschluss zu riskieren, was wiederum die Reduktion der Bauteildimensionen und somit kompaktere Bauweisen und Gewichtsersparnis ermöglicht.

Polycarbonat an sich hat im Gegensatz zu anderen thermoplastischen Polymeren wie Polystyrol, Polyester etc. eine sehr geringe Kriechstromfestigkeit bei moderater Flammwidrigkeit. Wegen des hohen Anteils an aromatischen Strukturen besitzt Polycarbonat eine recht hohe Tendenz zur Verkohlung. Der CTI von reinem Polycarbonat liegt bei etwa 250 V oder sogar darunter (F. Acquasanta et al., Polymer Degradation and Stability, 96 (2011), 2098-2103). Für zahlreiche Anwendungen im Elektro/Elektrik-Bereich (EE), z.B. im Bereich der Elektromobilität, wird jedoch aus Sicherheitsgründen ein höherer CTI, beispielsweise von mindestens 375 V, bevorzugt von mindestens 400 V (entsprechend der Isolierstoffgruppe PLC 0 nach EN 50124), der eingesetzten Materialien gefordert. Daher ist Polycarbonat als Material für eine Vielzahl von Anwendungen, die eben eine hohe Kriechstromfestigkeit des Materials erfordern, bisher nicht in Frage gekommen.

Für Anwendungen, bei denen eine hohe Kriechstromfestigkeit des Materials erforderlich ist, müssen die Materialien gleichzeitig auch eine hohe Flammwidrigkeit, d.h. eine V0-Klassifizierung nach UL 94V, insbesondere auch bei dünnen Wandstärken, aufweisen.

Reines Polycarbonat besitzt typischerweise zwar bereits eine gewisse intrinsische Flammwidrigkeit (V2-Klassifizierung nach UL 94 V), die allerdings für die meisten Anwendungen im EE-Bereich nicht ausreichend ist. Um die erforderliche V0-Klassifizierung gemäß UL94V zu erreichen, ist der Zusatz von geeigneten Flammschutzmitteln erforderlich. Typischerweise werden für Polycarbonat halogenierte Sulfonate (z.B. Rimar Salz (Kaliumperfluorbutansulfonat, C4-Salz) oder KSS-Salz (Kaliumdiphenylsulfon-3-sulfonat)) oder auch organische Phosphate (z.B. Bisphenol-A-bis(diphenylphosphat) (BDP), Resorcinol-bis(diphenylphosphat) (RDP)) oder Phosphazene eingesetzt. Mit dem Zusatz entsprechender Flammschutzadditive lässt sich die Flammwidrigkeit von Polycarbonat grundsätzlich sehr gut einstellen. Der Wirkmechanismus dieser Flammschutzmittel basiert aber auf der Ausbildung einer festen, verkohlten Oberflächenschicht, die die Sauerstoffzufuhr unterbricht und somit den Verbrennungsprozess hemmt.

Der zugrundeliegende Effekt für eine gute Kriechstromfestigkeit ist jedoch wiederum unter anderem eine niedrige Tendenz zur Ausbildung von leitfähigen Pfaden an der Oberfläche. Dies steht in direktem Gegensatz zum Wirkmechanismus, dem "Charring", von oberflächenaktiven Flammschutzmitteln und bereitet damit eine besondere Herausforderung, bei einem Polycarbonat-Material eine hohe Kriechstromfestigkeit und gute Flammwidrigkeit zu erreichen.

Materialien, die eine hohe Kriechstromfestigkeit aufweisen, werden insbesondere im Bereich von Elektronikbauteilen bzw. stromführenden Komponenten benötigt. Jeglicher Stromfluss ist mit der Erzeugung von Wärme verbunden, die mit steigender Leistung zunimmt. Um den technischen Ausfall zu verhindern und damit die Langlebigkeit solcher Komponenten zu gewährleisten ist es erforderlich, dass die entstehende Wärme ausreichend abgeführt wird. Es wäre wünschenswert, wenn es gelänge, ein Polycarbonat-Material bereitzustellen, das eine höhere Kriechstromfestigkeit und Flammwidrigkeit aufweist und gleichzeitig auch zur Abfuhr von Wärme beitragen kann.

Thermisch leitfähiges Polycarbonat-Material ist grundsätzlich aus dem Stand der Technik bekannt. So beschreibt WO 2018/037037 A1 entsprechende Zusammensetzungen, welche aufgrund der Verwendung von Talk eine verbesserte Wärmeleitfähigkeit aufweisen. Durch den Zusatz von Maleinsäureanhydrid-modifiziertem Olefin-Wachs wird der basische Polymer-Abbau durch den Talk weitgehend unterdrückt, so dass ein Material mit vorteilhaften mechanischen Eigenschaften resultiert. Ein solches Material zeichnet sich jedoch nicht durch eine gute Flammwidrigkeit aus und auch

die Kriechstromfestigkeit ist gegenüber reinem Polycarbonat nicht signifikant erhöht.

Es bestand somit die Aufgabe, thermisch leitfähige Polycarbonat-basierte Zusammensetzungen bereitzustellen, die eine UL94 V0-Klassifizierung bei 2 mm, bevorzugt bei 1,5 mm, erreichen als auch einen hohen CTI von mindestens 375 V, bevorzugt von mindestens 400 V, vorzugsweise bestimmt nach der Schnellprüfmethode in Anlehnung an IEC 60112:2009, aufweisen. Die thermische Leitfähigkeit (in plane) sollte bevorzugt bei mindestens 0,9 W/(mK), bestimmt gemäß ASTM E 1461-13, liegen. Aufgrund des Anwendungsbereiches und der Wärmeentwicklung in EE-Bauteilen sollten die Zusammensetzungen bevorzugt auch eine gute Wärmeformbeständigkeit aufweisen, insbesondere eine Vicat-Erweichungstemperatur, bestimmt nach ISO 306:2014-3, VST Methode B, von mindestens 107°C, bevorzugt von mindestens 108°C, besonders bevorzugt von mindestens 120°C.

Die WO 2020/212245 A1 beschreibt eine thermoplastische Zusammensetzung umfassend aromatisches Polycarbonat, Talk, ein anhydridmodifiziertes α-Olefin-Polymer, ein Fluoropolymer enthaltendes Antitropfmittel sowie Phosphazen. Überraschend hat sich gezeigt, dass die Lösung dieser Aufgabe der Bereitstellung von Zusammensetzungen mit einem solchen komplexen Eigenschaftsprofil durch die Kombination von Talk und aromatischem Polycarbonat mit phosphorhaltigem Flammschutzmittel, mit Antitropfmittel und die Verwendung von bestimmte Monomereinheiten-haltigem Polycarbonat, jeweils in ausgewählten Mengenbereichen, gelingt.

Gegenstand der Erfindung ist somit eine thermoplastische Zusammensetzung, enthaltend

A) mindestens 44,5 Gew.-% aromatisches Polycarbonat, wobei das aromatische Polycarbonat eine oder mehrere Monomereinheiten der Formel (1a)

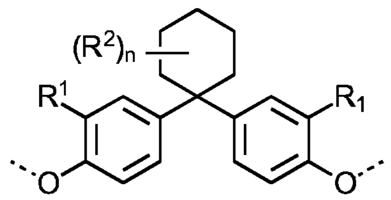

(1a)

in der

$R^1$ für Wasserstoff oder einen $C_1$- bis $C_4$-Alkylrest steht,
$R^2$ für einen $C_1$- bis $C_4$-Alkylrest steht,
n für 0, 1, 2 oder 3 steht,

in einem Anteil von 30 - 65 Gew.-%, bezogen auf das Gesamtgewicht des aromatischen Polycarbonats, aufweist,
B) 30 bis 40 Gew.-% Talk,
C) 6 bis 14 Gew.-% phosphorhaltiges Flammschutzmittel, wobei der Quotient aus

der Menge von Komponente C, bezogen auf die Gesamtzusammensetzung, und
der Menge aus Komponente A, bezogen auf die Gesamtzusammensetzung, multipliziert mit 100,
> 10,0 beträgt,

D) 0,3 bis 2,0 Gew.-% fluorhaltiges Antitropfmittel,
E) 1 bis 3 Gew.-% Anhydrid-modifiziertes α-Olefin-Polymer,

wobei, wenn der Talk-Gehalt < 35,0 Gew.-% ist, der Anteil der Monomereinheiten der Formel (1a), bezogen auf das Gesamtgewicht des aromatischen Polycarbonats, mindestens 35 Gew.-% beträgt und
wobei, wenn der Talk-Gehalt > 37 Gew.-% ist, Phosphazen als phosphorhaltiges Flammschutzmittel enthalten ist und der Phosphazen-Gehalt > 10,0 Gew.-% ist.

Die erfindungsgemäße Zusammensetzung kann neben den Komponenten A, B, C, D und E weitere Komponenten, etwa weitere Additive in Form der Komponente F, enthalten. Auch kann die Zusammensetzung einen oder mehrere weitere Thermoplasten als Blendpartner (Komponente G) enthalten, welche durch keine der Komponenten A bis F abgedeckt sind. Im Rahmen der vorliegenden Erfindung beziehen sich die angegebenen Gew.-% der Komponenten A, B, C, D, E und ggf. F sowie ggf. Blendpartner- soweit nicht explizit anders angegeben - jeweils auf das Gesamtgewicht der Zusammensetzung. Es versteht sich, dass sämtliche in einer erfindungsgemäßen Zusammensetzung enthaltenen Komponenten zusammen 100 Gew.-% ergeben. Sofern für einen Zahlenbereich die Obergrenze mit "bis X" angegeben

ist, schließt das den genannten Zahlenwert mit seinem Rundungsbereich nach oben hin ein.

Als Blendpartner geeignete, von den Komponenten A und E verschiedene, thermoplastische Polymere sind beispielsweise Polystyrol, Styrol-Copolymere, aromatische Polyester wie Polyethylenterephthalat (PET) oder Polybutylenterephthalat (PBT), PET-Cyclohexandimethanol-Copolymer (PETG), Polyethylennaphthalat (PEN), PMMA und PMMA-Copolymere sowie Copolymere mit Styrol wie z.B. transparentes Polystyrolacrylnitril (PSAN) oder aber auch thermoplastische Polyurethane. Bevorzugt werden diese Blendpartner in Konzentrationen von 0,5 Gew.-% bis 10 Gew.-% eingesetzt.

Ganz besonders bevorzugt enthalten die vorbeschriebenen Zusammensetzungen aber keine weiteren Komponenten, sondern die Mengen der Komponenten A, B, C, D, E und ggf. F, insbesondere in den beschriebenen bevorzugten Ausführungsformen, ergänzen sich zu 100 Gew.-%, d. h. die erfindungsgemäßen Zusammensetzungen bestehen aus den Komponenten A, B, C, D, E, ggf. F.

Es versteht sich, dass die eingesetzten Komponenten übliche Verunreinigungen, die beispielsweise aus ihren Herstellungsprozessen herrühren, enthalten können. Es ist bevorzugt, möglichst reine Komponenten einzusetzen. Es versteht sich weiterhin, dass diese Verunreinigungen auch bei einer geschlossenen Formulierung der Zusammensetzung enthalten sein können.

Die erfindungsgemäßen Zusammensetzungen zeigen bei Applikation von mindestens 50 Tropfen einer 0,1%-igen Ammoniumchlorid-Lösung bei 375 V, weiter bevorzugt bei 400 V, besonders bevorzugt bei 500 V keinen signifikanten Kriechstrom (> 0,5 A über 2s), wobei die Prüfung vorzugsweise nach dem in dem Beschreibungsteil beschriebenen Schnellprüfverfahren in Anlehnung an IEC 60112:2009 erfolgt. Bevorzugt besitzen die erfindungsgemäßen Zusammensetzungen eine Flammwidrigkeit V0 nach UL 94 V in Dicken der Prüfkörper von 3 mm, weiter bevorzugt bei Dicken der Prüfkörper von 2 mm, noch weiter bevorzugt außerdem von mindestens V1, ganz besonders bevorzugt von V0, bei 1,5 mm, jeweils nach Konditionierung der Prüfkörper für 7 Tage bei 50 % relativer Luftfeuchte und 70°C Umgebungstemperatur. Bevorzugt besitzen die Zusammensetzungen neben dem hohen CTI und der guten Flammwidrigkeit auch eine gute Wärmeformbeständigkeit, welche sich in einer Vicat-Erweichungstemperatur, bestimmt nach ISO 306:2014-3, VST Methode B, von mindestens 107°C, bevorzugt von mindestens 108°C, besonders bevorzugt von mindestens 120°C zeigt.

Die einzelnen Bestandteile der erfindungsgemäßen Zusammensetzungen sind im Folgenden noch näher erläutert:

## Komponente A

Komponente A der erfindungsgemäßen Zusammensetzungen sind aromatische Polycarbonate.

Aromatische Polycarbonate im Sinne der vorliegenden Erfindung sind sowohl Homopolycarbonate als auch Copolycarbonate und/oder Polyestercarbonate; die Polycarbonate können in bekannter Weise linear oder verzweigt sein. Erfindungsgemäß können auch Mischungen von Polycarbonaten verwendet werden.

Die thermoplastischen Polycarbonate, einschließlich der thermoplastischen, aromatischen Polyestercarbonate, haben bevorzugt gewichtsmittlere Molekulargewichte $M_w$ von 15.000 g/mol bis 40.000 g/mol, weiter bevorzugt bis 34.000 g/mol, besonders bevorzugt von 17.000 g/mol bis 33.000 g/mol, insbesondere von 19.000 g/mol bis 32.000 g/mol, ermittelt durch Gelpermeationschromotographie, kalibriert gegen Bisphenol A-Polycarbonat Standards unter Verwendung von Dichlormethan als Elutionsmittel, Kalibrierung mit linearen Polycarbonaten (aus Bisphenol A und Phosgen) bekannter Molmassenverteilung der PSS Polymer Standards Service GmbH, Deutschland, Kalibrierung nach der Methode 2301-0257502-09D (aus dem Jahre 2009 in deutscher Sprache) der Currenta GmbH & Co. OHG, Leverkusen. Das Elutionsmittel ist Dichlormethan. Säulenkombination aus vernetzten Styrol-Divinylbenzolharzen. Durchmesser der analytischen Säulen: 7,5 mm; Länge: 300 mm. Partikelgrößen des Säulenmaterials: 3 $\mu$m bis 20 $\mu$m. Konzentration der Lösungen: 0,2 Gew.-%. Flussrate: 1,0 ml/min, Temperatur der Lösungen: 30°C. Verwendung einer UV- und/oder RI-Detektion.

Die Schmelzevolumenfließrate MVR des eingesetzten aromatischen Polycarbonats, bestimmt gemäß ISO 1133:2012-03, bei einer Prüftemperatur 300°C und 1,2 kg Belastung, beträgt bevorzugt 5 bis 35 $cm^3$/(10 min), weiter bevorzugt 6 $cm^3$/(10 min) bis 25 $cm^3$/(10 min), noch weiter bevorzugt 6 bis 21 $cm^3$/(10 min).

Ein Teil, bis 80 Mol-%, vorzugsweise von 20 Mol-% bis 50 Mol-%, der Carbonat-Gruppen in den erfindungsgemäß eingesetzten Polycarbonaten können durch aromatische DicarbonsäureesterGruppen ersetzt sein. Derartige Polycarbonate, die sowohl Säurereste der Kohlensäure als auch Säurereste von aromatischen Dicarbonsäuren in die Molekülkette eingebaut enthalten, werden als aromatische Polyestercarbonate bezeichnet. Sie werden im Rahmen der vorliegenden Erfindung unter dem Oberbegriff der thermoplastischen, aromatischen Polycarbonate subsumiert.

Einzelheiten der Herstellung von Polycarbonaten sind in vielen Patentschriften seit etwa 40 Jahren niedergelegt. Beispielhaft sei hier auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertné, BAYER AG, "Polycarbonates" in Encyclopedia of Polymer Science and Engineering, Volume 11, Second Edition, 1988, Seiten 648-718 und

schließlich auf U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117 bis 299 verwiesen.

Die Herstellung aromatischer Polycarbonate erfolgt z.B. durch Umsetzung von Dihydroxyarylverbindungen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern und gegebenenfalls unter Verwendung von trifunktionellen oder mehr als trifunktionellen Verzweigern. Ebenso ist eine Herstellung über ein Schmelzepolymerisationsverfahren durch Umsetzung von Dihydroxyarylverbindungen mit beispielsweise Diphenylcarbonat möglich.

Für die Herstellung der Polyestercarbonate wird ein Teil der Kohlensäurederivate durch aromatische Dicarbonsäuren oder Derivate der Dicarbonsäuren ersetzt, und zwar je nach Maßgabe der in den aromatischen Polycarbonaten zu ersetzenden Carbonatstruktureinheiten durch aromatische Dicarbonsäureesterstruktureinheiten.

Für die Herstellung von Polycarbonaten geeignete Dihydroxyarylverbindungen sind solche der Formel (1)

HO-Z-OH (1),

in welcher

Z ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Bevorzugt steht Z in Formel (1) für einen Rest der Formel (2)

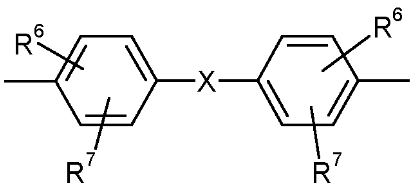
(2),

in der

$R^6$ und $R^7$ unabhängig voneinander für H, $C_1$- bis $C_{18}$-Alkyl-, $C_1$- bis $C_{18}$-Alkoxy, Halogen wie Cl oder Br oder für jeweils gegebenenfalls substituiertes Aryl- oder Aralkyl, bevorzugt für H oder $C_1$- bis $C_{12}$-Alkyl, besonders bevorzugt für H oder $C_1$- bis $C_8$-Alkyl und ganz besonders bevorzugt für H oder Methyl stehen, und

X für eine Einfachbindung, $-SO_2-$, -CO-, -O-, -S-, $C_1$- bis $C_6$-Alkylen, $C_2$- bis $C_5$-Alkyliden oder $C_5$- bis $C_6$-Cycloalkyliden, welches mit $C_1$- bis $C_6$-Alkyl, vorzugsweise Methyl oder Ethyl, substituiert sein kann, ferner für $C_6$- bis $C_{12}$-Arylen, welches gegebenenfalls mit weiteren Heteroatome enthaltenden aromatischen Ringen kondensiert sein kann, steht.

Bevorzugt steht X für eine Einfachbindung, $C_1$- bis $C_5$-Alkylen, $C_2$- bis $C_5$-Alkyliden, $C_5$- bis $C_6$-Cycloalkyliden, -O-, -SO-, -CO-, -S-, $-SO_2-$
oder für einen Rest der Formel (3)

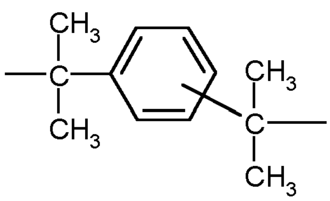
(3).

Beispiele für Dihydroxyarylverbindungen sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole sowie deren kernalkylierte und kernhalogenierte Verbindungen.

Für die Herstellung der Polycarbonate geeignete Dihydroxyarylverbindungen sind beispielsweise Hydrochinon,

Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α-α'-Bis-(hydroxyphenyl)-diisopropylbenzole, Phthalimidine, abgeleitet von Isatin- oder Phenolphthaleinderivaten, sowie deren kernalkylierte, kernarylierte und kernhalogenierte Verbindungen.

Bevorzugte Dihydroxyarylverbindungen sind 4,4'-Dihydroxydiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol und 1,1-Bis-(4-hydroxyphenyl)-3,3,5-trimethylcyclohexan, sowie Dihydroxyarylverbindungen (I) bis (III)

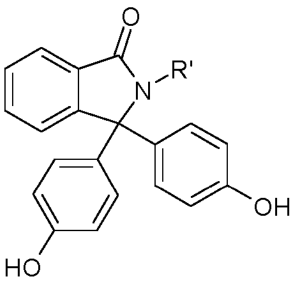
(I)

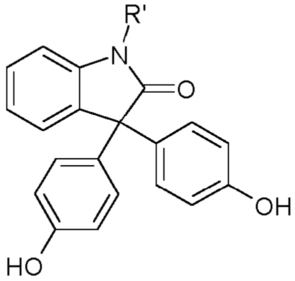
(II)

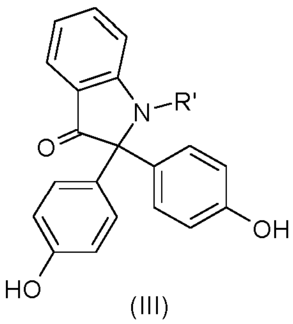
(III)

,

in denen R' jeweils für einen $C_1$- bis $C_4$-Alkylrest, Aralkylrest oder Arylrest, bevorzugt für einen Methylrest oder Phenylrest, ganz besonders bevorzugt für einen Methylrest, steht.

Besonders bevorzugte Dihydroxyarylverbindungen sind 2,2-Bis-(4-hydroxyphenyl)-propan (Bisphenol A), 2,2-Bis-(3,5-dimethyl-4-hydroxyphenyl)-propan, 1,1-Bis-(4-hydroxyphenyl)-cyclohexan, 1,1-Bis-(4-hydroxyphenyl)-3,3,5-trimethylcyclohexan, 4,4'-Dihydroxydiphenyl und Dimethyl-Bisphenol A sowie die Bisphenole der Formeln (I), (II) und (III).

Diese und weitere geeignete Dihydroxyarylverbindungen sind z.B. in US 3 028 635 A, US 2 999 835 A, US 3 148 172 A, US 2 991 273 A, US 3 271 367 A, US 4 982 014 A und US 2 999 846 A, in DE 1 570 703 A, DE 2063 050 A, DE 2 036 052 A, DE 2 211 956 A und DE 3 832 396 A, in FR 1 561 518 A, in der Monographie "H. Schnell, Chemistry and Physics of Polycarbonates, Interscience Publishers, New York 1964" sowie in JP 62039/1986 A, JP 62040/1986 A und JP 105550/1986 A beschrieben.

Im Fall der Homopolycarbonate wird nur eine Dihydroxyarylverbindung eingesetzt, im Fall der Copolycarbonate werden zwei oder mehr Dihydroxyarylverbindungen eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind Monophenole. Geeignete Monophenole sind beispielsweise Phenol selbst, Alkylphenole wie Kresole, p-tert.-Butylphenol, Cumylphenol sowie deren Mischungen.

Bevorzugte Kettenabbrecher sind die Phenole, welche ein- oder mehrfach mit $C_1$- bis $C_{30}$-Alkylresten, linear oder verzweigt, bevorzugt unsubstituiert, oder mit tert-Butyl substituiert sind. Besonders bevorzugte Kettenabbrecher sind Phenol, Cumylphenol und/oder p-tert-Butylphenol.

Die Menge an einzusetzendem Kettenabbrecher beträgt bevorzugt 0,1 bis 5 Mol-%, bezogen auf Mole an jeweils eingesetzten Dihydroxyarylverbindungen. Die Zugabe der Kettenabbrecher kann vor, während oder nach der Umsetzung mit einem Kohlensäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise 1,3,5-Tri-(4-hydroxyphenyl)-benzol, 1,1,1-Tri-(4-hydroxyphenyl)-ethan, Tri-(4-hydroxyphenyl)-phenylmethan, 2,4-Bis-(4-hydroxyphenylisopropyl)-phenol, 2,6-Bis-(2-hydroxy-5'-methylbenzyl)-4-methylphenol, 2-(4-Hydroxyphenyl)-2-(2,4-dihydroxyphenyl)-propan, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol-%, bezogen auf Mole an jeweils eingesetzten Dihydroxyarylverbindungen.

Die Verzweiger können entweder mit den Dihydroxyarylverbindungen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Dihydroxyarylverbindungen eingesetzt.

Besonders bevorzugte Polycarbonate sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan beziehungsweise der beiden Monomere Bisphenol A und 4,4'-Dihydroxydiphenyl, sowie von den Dihydroxyarylverbindungen der Formeln (I), (II) und/oder (III)

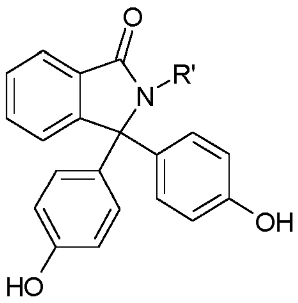
(I)

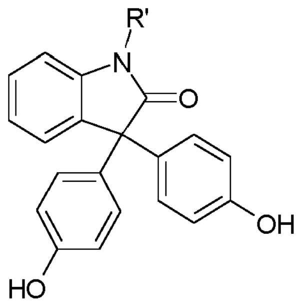
(II)

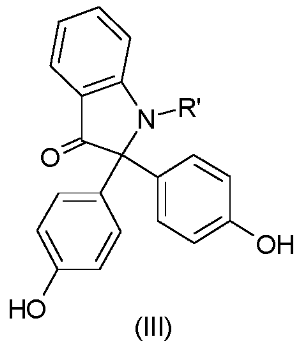
(III)

,

in denen R' jeweils für $C_1$- bis $C_4$-Alkyl, Aralkyl oder Aryl, bevorzugt für Methyl oder Phenyl, ganz besonders bevorzugt für Methyl, steht,
abgeleitete Homo- oder Copolycarbonate, insbesondere mit Bisphenol A. Ganz besonders bevorzugt umfasst das aromatische Polycarbonat ein Bisphenol A-basiertes Homopolycarbonat und ein Copolycarbonat auf Basis der beiden Monomere Bisphenol A und 1,1-Bis-(4-hydroxyphenyl)-3,3,5-trimethylcyclohexan. Äußerst bevorzugt ist das aromatische Polycarbonat eine Mischung von Bisphenol A-basiertem Homopolycarbonat und Copolycarbonat auf Basis der beiden Monomere Bisphenol A und 1,1-Bis-(4-hydroxyphenyl)-3,3,5-trimethylcyclohexan.

Der Gesamtanteil der Monomereinheiten beruhend auf den Formeln (I), (II), (III), 4,4'-Dihydroxydiphenyl und/oder Bisphenol TMC im Copolycarbonat beträgt vorzugsweise 0,1 - 88 mol-%, besonders bevorzugt 1 - 86 mol-%, ganz besonders bevorzugt 5 - 84 mol-% und insbesondere 10 - 82 mol-% (bezogen auf die Summe der Mole eingesetzter Dihydroxyarylverbindungen).

Die relative Lösungsviskosität der Copolycarbonate, bestimmt nach ISO 1628-4:1999, liegt bevorzugt im Bereich von = 1,15 - 1,35.

Die verwendeten Dihydroxyarylverbindungen, wie auch alle anderen der Synthese zugesetzten Chemikalien und Hilfsstoffe, können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

Für die Herstellung der Polyestercarbonate geeignete aromatische Dicarbonsäuren sind beispielsweise Orthophthalsäure, Terephthalsäure, Isophthalsäure, tert-Butylisophthalsäure, 3,3'-Diphenyldicarbonsäure, 4,4'-Diphenyldicarbonsäure, 4,4-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure.

Von den aromatischen Dicarbonsäuren werden besonders bevorzugt die Terephthalsäure und/oder Isophthalsäure eingesetzt.

Derivate der Dicarbonsäuren sind die Dicarbonsäuredihalogenide und die Dicarbonsäuredialkylester, insbesondere die Dicarbonsäuredichloride und die Dicarbonsäuredimethylester.

Der Ersatz der Carbonatgruppen durch die aromatischen Dicarbonsäureestergruppen erfolgt im Wesentlichen stöchiometrisch und auch quantitativ, so dass das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Die erfindungsgemäßen Zusammensetzungen enthalten mindestens 44,5 Gew.-%, bevorzugt mindestens 50 Gew.-% aromatisches Polycarbonat, basieren also auf aromatischem Polycarbonat.

Erfindungsgemäß enthält das aromatische Polycarbonat der Zusammensetzungen 30 bis 65 Gew.-%, bevorzugt bis 60 Gew.-%, besonders bevorzugt 40 bis 55 Gew.-%, ganz besonders bevorzugt 40 bis 50 Gew.-%, bezogen auf das Gesamtgewicht an aromatischem Polycarbonat, eine oder mehrere Monomereinheiten der Formel (1a)

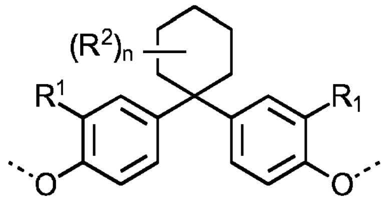

(1a)

,

in der

$R^1$ für Wasserstoff oder einen $C_1$- bis $C_4$-Alkylrest, bevorzugt für Wasserstoff, steht,
$R^2$ für einen $C_1$- bis $C_4$-Alkylrest, bevorzugt Methylrest, steht,
n für 0, 1, 2 oder 3, bevorzugt 3, steht.

Ein entsprechendes Copolycarbonat, welches erfindungsgemäß bevorzugt eingesetzt wird, ist beispielsweise unter der Bezeichnung "APEC®" von der Covestro Deutschland AG erhältlich.

Der vorgenannte Gehalt an entsprechenden Monomereinheiten, beispielsweise von Bisphenol TMC, im aromatischen Polycarbonat der Zusammensetzung wird erreicht durch Zumischung von einen Homopolycarbonat aus solchen Monomereinheiten, bevorzugt von einem Bisphenol TMC-Homopolycarbonat, zu einem oder mehreren anderen (Co)polycarbonaten bzw. ausschließliche Verwendung oder entsprechende Einheiten enthaltenden, bevorzugt Bisphenol TMC-Einheiten-haltigen Copolycarbonat oder die Zumischung von einem entsprechende Monomereinheitenhaltigen, bevorzugt einem Bisphenol TMC-Einheiten-haltigen Copolycarbonat zu einem oder mehreren Homo- oder Copolycarbonaten. Erfindungsgemäß besonders bevorzugt handelt es sich bei dem aromatischem Polycarbonat der Zusammensetzungen um Bisphenol TMC-Einheiten-haltiges Copolycarbonat oder eine Mischung aus Bisphenol TMC-Einheiten-haltigem Copolycarbonat mit Bisphenol A-Homopolycarbonat. "Bisphenol TMC-Einheiten-haltiges Polycarbonat" wird erfindungsgemäß verstanden als ein Polycarbonat, das Bisphenol TMC als eingebauten Monomerbaustein enthält.

Bisphenol TMC, 1,1-Bis-(4-hydroxyphenyl)-3,3,5-trimethylcyclohexan, (Formel (1a')) und sein Einsatz in Homopolycarbonaten sind aus der Literatur bekannt (DE 3918406 A1)

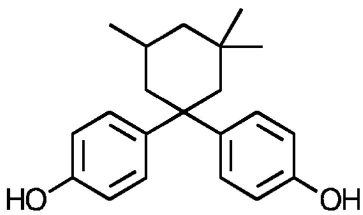

(1a').

Der Gesamtanteil der Monomereinheiten der Formeln (1a') im Copolycarbonat beträgt vorzugsweise 0,1 - 88 mol-%, besonders bevorzugt 1 - 86 mol-%, ganz besonders bevorzugt 5 - 84 mol-% und insbesondere 10 - 82 mol-% (bezogen auf die Summe der Mole eingesetzter Diphenole).

Bei 30 Gew.-% und mehr Bisphenol TMC im Copolycarbonat liegt die Vicat-Temperatur (VST/B 120; ISO 306:2013) des Copolycarbonats bei über 175°C. Als Comonomer wird bevorzugt Bisphenol A eingesetzt. Besonders bevorzugt ist das Copolycarbonat aus den Monomeren Bisphenol TMC und Bisphenol A aufgebaut.

Die Copolycarbonate können als block- und statistisches Copolycarbonat vorliegen. Besonders bevorzugt sind statistische Copolycarbonate.

**Komponente B**

Talk im Sinne der vorliegenden Erfindung ist bevorzugt ein Talk, welcher im Wesentlichen die gleiche chemische Zusammensetzung, Partikeldurchmesser, Porosität und/oder BET-Oberfläche aufweist, oder ein Talkgemisch.

Bei Talk handelt es sich im Allgemeinen um ein Schichtsilikat. Es kann beschrieben werden als Magnesiumsilikathydrat mit der allgemeinen chemischen Zusammensetzung $Mg_3[Si_4O_{10}(OH)_2]$. Unterschiedliche Talkarten enthalten jedoch unterschiedliche Verunreinigungen, so dass Abweichungen von dieser allgemeinen Zusammensetzung vorliegen

können.

Der eingesetzte Talk oder das Talkgemisch zur Herstellung der erfindungsgemäßen Zusammensetzung kann beschlichtet oder unbeschlichtet sein. Bevorzugt ist der Talk unbeschlichtet. Im Sinne der vorliegenden Erfindung wird eine Schlichte als eine gezielte (chemi- oder physisorbierte) Anreicherung von Molekülen an der Oberfläche betrachtet. Bei unbeschlichtetem Talk handelt es sich somit um nicht oberflächen-behandelten Talk, d. h. nach der Gewinnung der Talkpartikel mit dem gewünschten Partikeldurchmesser und gegebenenfalls einer Kompaktierung wurde der Talk bevorzugt keinem weiteren Verfahrensschritt unterzogen, welcher die Oberfläche des Talks durch Chemisorption und/oder Physisorption gezielt verändert. Dies schließt jedoch nicht aus, dass unbeabsichtigt Verunreinigungen, Staub oder ähnliche Partikel während der weiteren Handhabung des Talks an Teile der Oberfläche gelangen, solange die Oberfläche des Talks nicht wesentlich ihre Eigenschaften, insbesondere in Bezug auf den pH-Wert, verliert.

Bevorzugt weist der Talk einen pH-Wert von 8 bis 10, besonders bevorzugt 8,5 bis 9,8, ganz besonders bevorzugt 9,0 bis 9,7 auf, wobei der pH-Wert bestimmt wird gemäß EN ISO 787-9:1995. Es ist zu beachten, dass die EN ISO 787-9:1995 auch die Möglichkeit der Zugabe von Ethanol oder anderen organischen Lösungsmitteln zur Verbesserung der Dispergierung des zu vermessenden Feststoffes erwähnt. Bevorzugt wird erfindungsgemäß nur destilliertes Wasser zur Bestimmung des pH-Wertes gemäß EN ISO 787-9:1995 eingesetzt.

Die Komponente B, der Talk, weist bevorzugt einen Gehalt an Eisen(II)oxid und/oder Eisen(III)oxid von 0,2 bis 2,5 Gew.-%, besonders bevorzugt 0,3 bis 2,3 Gew.-%, ganz besonders bevorzugt von 0,3 bis 2,0 Gew.-% auf. Dieser Gehalt wird bevorzugt gemessen durch Röntgenfluoreszenz oder Atomabsorptionsspektroskopie. Der Gehalt an Eisenoxid im Talk hat einen Einfluss auf den Grad des Abbau des Polycarbonats aufweist. Es ist vorteilhaft, Talk mit dem angegebenen EisenoxidGehalt zu verwenden.

Ebenso bevorzugt weist die Komponente B einen Gehalt an Aluminiumoxid von 0,01 bis 0,5 Gew.-%, besonders bevorzugt von 0,05 bis 0,48 Gew.-%, ganz besonders bevorzugt von 0,15 bis 0,45 Gew.-% auf.

Die Komponente B weist bevorzugt einen mittleren Partikeldurchmesser D50 von 0,01 bis 10 μm auf, besonders bevorzugt 0,25 bis 10,00 μm, weiterhin bevorzugt 0,5 bis 10,00 μm auf, wobei der Partikeldurchmesser D50 bestimmt wird durch Sedimentationsanalyse. Unter dem Mittelwert D50 versteht der Fachmann einen mittleren Partikeldurchmesser, bei dem 50 % der Partikel kleiner sind als der definierte Wert. Bevorzugt wird der Partikeldurchmesser D50 bestimmt gemäß ISO13317-3:2001.

Komponente B weist bevorzugt eine BET-Oberfläche von 7,5 bis 20,0 $m^2/g$, besonders bevorzugt von 9,0 bis 15,0 $m^2/g$, ganz besonders bevorzugt 9,5 bis 14,0 $m^2/g$ auf. Die Bestimmung der Oberfläche nach Brunauer, Emmett und Teller mittels Gasadsorption ist dem Fachmann an sich bekannt. Bevorzugt wird die BET-Oberfläche gemäß ISO 4652:2012 bestimmt. Diese bevorzugte BET-Oberfläche wird besonders bevorzugt mit dem oben beschriebenen mittleren Partikeldurchmesser D50 des Talks verbunden. Es hat sich herausgestellt, dass bei einer solchen Kombination die erfindungsgemäß eingesetzte Komponente B optimal auf die erfindungsgemäß eingesetzte Komponente C abgestimmt ist. Durch die spezielle Säurezahl und Molmasse der Komponente E kann der Abbau des Polycarbonats, welcher durch die Komponente B verursacht wird, minimiert werden.

Besonders bevorzugt weist der Talk einen Talkgehalt von > 96 Gew.-%, besonders bevorzugt > 97 Gew.-%, ganz besonders bevorzugt > 98 Gew.-% auf.

Ebenso ist es bevorzugt, dass der Talk einen Glühverlust bei 1050 °C von 5,0 bis 7,0 Gew.-%, besonders bevorzugt von 5,2 bis 6,5 Gew.-% und ganz besonders bevorzugt von 5,3 bis 6,2 Gew.-% aufweist. Der Glühverlust wird bevorzugt mittels DIN51081:2002 bestimmt.

Der Talk oder das Talkgemisch gemäß Komponente B liegt bevorzugt kompaktiert vor. Sofern es sich um ein Talkgemisch handelt, beziehen sich die vorgenannten Zahlenangaben jeweils auf das Talkgemisch, d.h. die Komponente B in ihrer Gesamtheit.

Die erfindungsgemäßen Zusammensetzungen weisen einen Talkgehalt von 30 bis 40 Gew.-%, bevorzugt von 30 bis 35 Gew.-%, bezogen auf die Gesamtzusammensetzung, auf.

**Komponente C**

Bei Komponente C der erfindungsgemäßen Zusammensetzungen handelt es sich um Phosphorhaltige Flammschutzmittel. Es kann sich um ein einziges Phosphor-haltiges Flammschutzmittel handeln, aber auch um eine Mischung verschiedener Phosphor-haltiger Flammschutzmittel.

Bevorzugte Phosphor-haltige Flammschutzmittel sind cyclische Phosphazene, Phosphorverbindungen der Formel (10) und deren Mischungen:

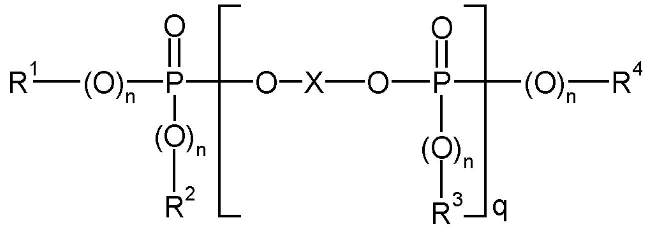

(10),

worin

$R^1$, $R^2$, $R^3$ und $R^4$ unabhängig voneinander für einen $C_1$- bis $C_8$-Alkylrest, jeweils gegebenenfalls halogeniert und jeweils verzweigt oder unverzweigt, und/oder $C_5$- bis $C_6$-Cycloalkylrest, $C_6$- bis $C_{20}$-Arylrest oder $C_7$- bis $C_{12}$-Aralkylrest, jeweils gegebenenfalls durch verzweigtes oder unverzweigtes Alkyl und/oder Halogen, vorzugsweise Chlor und/oder Brom, substituiert,
n unabhängig voneinander 0 oder 1,
q einen Wert von 0 bis 30 und
X einen ein- oder mehrkernigen aromatischen Rest mit 6 bis 30 C-Atomen oder einen linearen oder verzweigten aliphatischen Rest mit 2 bis 30 C-Atomen, der jeweils substituiert oder unsubstituiert, verbrückt oder unverbrückt sein kann, bedeuten.

Bevorzugt stehen $R^1$, $R^2$, $R^3$ und $R^4$ unabhängig voneinander für verzweigtes oder unverzweigtes $C_1$-bis $C_4$-Alkyl, Phenyl, Naphthyl oder mit $C_1$- bis $C_4$-Alkyl substituiertes Phenyl. Im Falle aromatischer Gruppen $R^1$, $R^2$, $R^3$ und/oder $R^4$ können diese ihrerseits mit Halogen- und/oder Alkylgruppen, vorzugsweise Chlor, Brom und/oder $C_1$- bis $C_4$-Alkyl, verzweigt oder unverzweigt, substituiert sein. Besonders bevorzugte Aryl-Reste sind Kresyl, Phenyl, Xylenyl, Propylphenyl oder Butylphenyl sowie die entsprechenden bromierten und chlorierten Derivate davon.

X in der Formel (10) leitet sich bevorzugt von Dihydroxyarylverbindungen ab.

X in Formel (10) steht besonders bevorzugt für

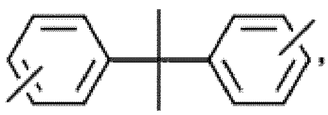,
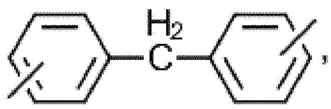,
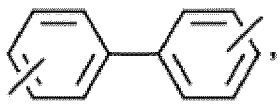,
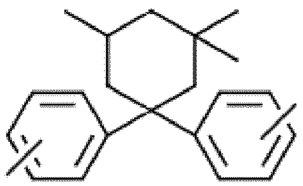

(Xi) (Xii)

(Xiii) (XiV)

oder deren chlorierte und/oder bromierte Derivate. Bevorzugt leitet sich X (mit den angrenzenden Sauerstoffatomen) von Hydrochinon, Bisphenol A oder Diphenylphenol ab. Ebenfalls bevorzugt leitet sich X von Resorcin ab. Besonders bevorzugt leitet sich X von Bisphenol A ab. n in der Formel (10) ist vorzugsweise gleich 1. q steht bevorzugt für 0 bis 20, besonders bevorzugt 0 bis 10, im Falle von Mischungen für Durchschnittswerte von 0,8 bis 5,0, bevorzugt 1,0 bis 3,0, weiter bevorzugt 1,05 bis 2,00 und besonders bevorzugt von 1,08 bis 1,60.

Als Phosphorverbindung der allgemeinen Formel (10) ist eine Verbindung der Formel (11) bevorzugt:

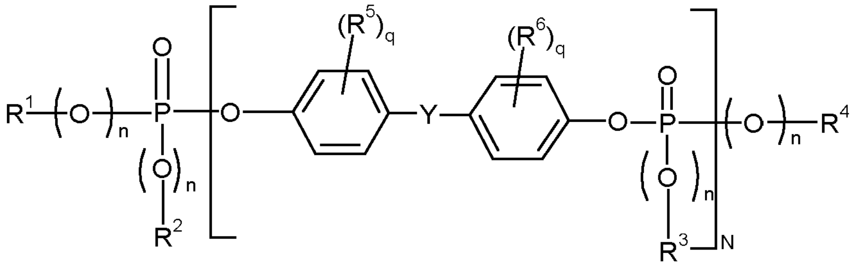

(11),

worin

$R^1$, $R^2$, $R^3$ und $R^4$ jeweils unabhängig voneinander einen linearen oder verzweigten $C_1$- bis $C_8$-Alkylrest und/oder gegebenenfalls durch lineares oder verzweigtes Alkyl-substituierten $C_5$- bis $C_6$-Cycloalkylrest, $C_6$- bis $C_{10}$-Arylrest oder $C_7$- bis $C_{12}$-Aralkylrest,
n unabhängig voneinander 0 oder 1,
q unabhängig voneinander 0, 1, 2, 3 oder 4,
N eine Zahl zwischen 1 und 30,
$R_5$ und $R_6$ unabhängig voneinander lineares oder verzweigtes $C_1$- bis $C_4$-Alkylrest, vorzugsweise Methylrest, und
Y lineares oder verzweigtes $C_1$- bis $C_7$-Alkyliden, einen linearen oder verzweigten $C_1$-bis $C_7$-Alkylenrest, $C_5$- bis $C_{12}$-Cycloalkylenrest, $C_5$- bis $C_{12}$-Cycloalkylidenrest, -O-, -S-, - SO-, $SO_2$ oder -CO- bedeuten.

Phosphorverbindungen der Formel (10) sind insbesondere Tributylphosphat, Triphenylphosphat, Trikresylphosphat, Diphenylkresylphosphat, Diphenyloctylphosphat, Diphenyl-2-ethyl-kresylphosphat, Tri-(isopropylphenyl)-phosphat, Resorcin verbrücktes Oligophosphat und Bisphenol A verbrücktes Oligophosphat. Der Einsatz von oligomeren Phosphorsäureestern der Formel (10), die sich vom Bisphenol A ableiten, ist, sofern Phosphorverbindungen der Formel (10) eingesetzt werden, insbesondere bevorzugt.

Weiter bevorzugt werden Mischungen mit gleicher Struktur und unterschiedlicher Kettenlänge verwendet, wobei es sich bei dem angegebenen q-Wert um den mittleren q-Wert handelt. Der mittlere q-Wert wird bestimmt, indem mittels High Pressure Liquid Chromatography (HPLC) bei 40°C in einem Gemisch aus Acetonitril und Wasser (50:50) die Zusammensetzung des Phosphorverbindungsgemisches (Molekulargewichtsverteilung) bestimmt wird und daraus die Mittelwerte für q berechnet werden.

Dabei ist besonders bevorzugt auf Bisphenol A-basierendes Oligophosphat (Bisphenol-A-bis(diphenylphosphat)) gemäß Formel (12) mit q = 1 bis 20, insbesondere mit q = 1,0 bis 1,2, in den erfindungsgemäßen Zusammensetzungen enthalten.

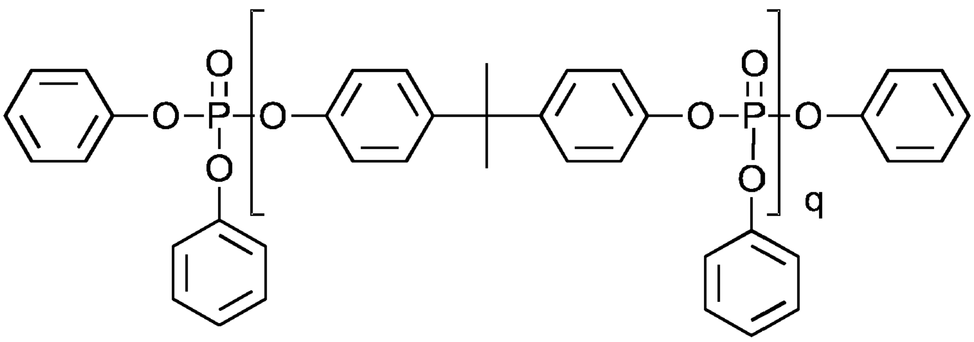

(12)

Derartige Phosphorverbindungen sind bekannt (vgl. z.B. EP 0 363 608 A1, EP 0 640 655 A2) oder lassen sich nach bekannten Methoden in analoger Weise herstellen (z.B. Ullmanns Enzyklopädie der technischen Chemie, Bd. 18, S. 301 ff., 1979; Houben-Weyl, Methoden der organischen Chemie, Bd. 12/1, S. 43; Beilstein Bd. 6, S. 177).

Alternativ besonders bevorzugt werden als Komponente C cyclische Phosphazene gemäß Formel (13) eingesetzt:

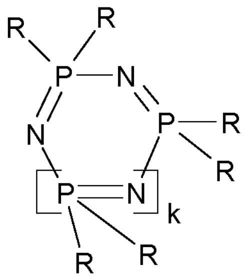

(13),

wobei

R jeweils gleich oder verschieden ist und für

- einen Aminrest,
- einen jeweils gegebenenfalls halogenierten, vorzugsweise mit Fluor halogenierten, weiter bevorzugt monohalogenierten, $C_1$- bis $C_8$-Alkylrest, vorzugsweise Methylrest, Ethylrest, Propylrest oder Butylrest,
- einen $C_1$- bis $C_8$- Alkoxyrest, vorzugsweise einen Methoxyrest, Ethoxyrest, Propoxyrest oder Butoxyrest,
- einen jeweils gegebenenfalls durch Alkyl, vorzugsweise $C_1$- bis $C_4$-Alkyl, und/oder Halogen, vorzugsweise Chlor und/oder Brom, substituierten $C_5$- bis $C_6$-Cycloalkylrest,
- einen jeweils gegebenenfalls durch Alkyl, vorzugsweise $C_1$- bis $C_4$-Alkyl, und/oder Halogen, vorzugsweise Chlor, Brom, und/oder Hydroxy-substituierten, $C_6$- bis $C_{20}$-Aryloxyrest, vorzugsweise Phenoxyrest, Naphthyloxyrest,
- einen jeweils gegebenenfalls durch Alkyl, vorzugsweise $C_1$- bis $C_4$-Alkyl, und/oder Halogen, vorzugsweise Chlor und/oder Brom, substituierten $C_7$- bis $C_{12}$-Aralkylrest, vorzugsweise Phenyl- $C_1$- bis $C_4$-alkylrest, oder
- einen Halogen-Rest, vorzugsweise Chlor oder Fluor, oder
- einen OH-Rest steht,

k für eine ganze Zahl von 1 bis 10, vorzugsweise für eine Zahl von 1 bis 8, besonders bevorzugt 1 bis 5, ganz besonders bevorzugt für 1, steht.

Dabei werden bevorzugt kommerziell erhältliche Phosphazene eingesetzt. Bei diesen handelt es sich üblicherweise um Gemische von Cyclen unterschiedlicher Ringgröße.

Weiter bevorzugt sind, sowohl einzeln als auch in Mischung: Propoxyphosphazen, Phenoxyphosphazen, Methylphenoxyphosphazen, Aminophosphazen, Fluoralkylphosphazene sowie Phosphazene der folgenden Strukturen:

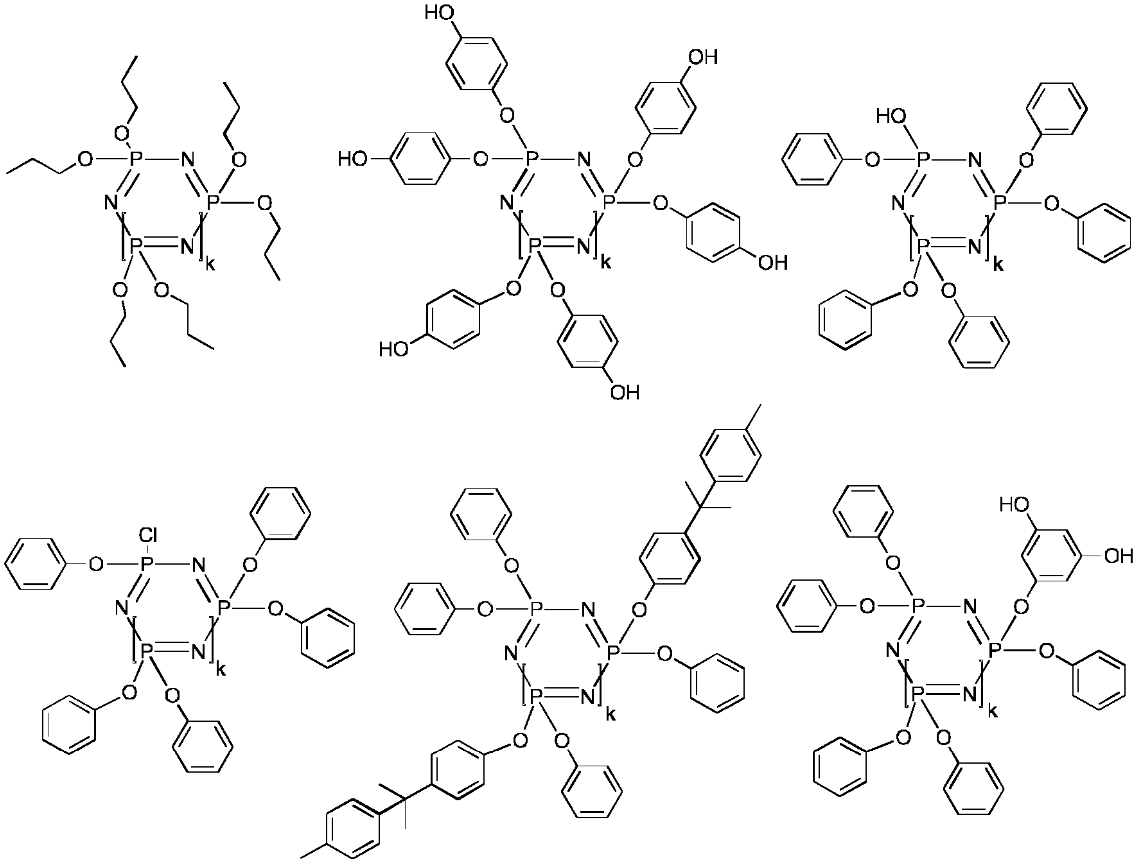

(13a-f)

In den oben gezeigten Verbindungen 13a-f ist k = 1, 2 oder 3.

Bevorzugt ist der Anteil von am Phosphor Halogen-substituierten Phosphazenen, z. B. aus unvollständig reagiertem Ausgangsmaterial, kleiner als 1000 ppm, weiter bevorzugt kleiner als 500 ppm.

Die Phosphazene können allein oder als Mischung eingesetzt werden. Der Rest R kann immer gleich sein oder zwei oder mehr Reste in den Formeln können verschieden sein. Bevorzugt sind die Reste R eines Phosphazens identisch.

In einer Ausführungsform werden nur Phosphazene mit gleichem R eingesetzt.

Bevorzugt beträgt der Anteil der Tetramere (k = 2) von 2 bis 50 mol-%, bezogen auf die Komponente B, weiter bevorzugt von 5 bis 40 mol-%, noch weiter bevorzugt von 10 bis 30 mol-%, besonders bevorzugt von 10 bis 22 mol-%.

Bevorzugt beträgt der Anteil der höheren oligomeren Phosphazene (k = 3, 4, 5, 6 und 7) von 0 bis 30 mol-%, bezogen auf die Komponente B, weiter bevorzugt von 2,5 bis 25 mol-%, noch weiter bevorzugt von 5 bis 20 mol-%, und besonders bevorzugt von 6 - 15 mol-%.

Bevorzugt beträgt der Anteil der Oligomere mit k≥ 8 von 0 bis 2,0 mol-%, bezogen auf die Komponente B, und bevorzugt von 0,10 bis 1,00 mol-%.

Weiter bevorzugt erfüllen die Phosphazene der Komponente C alle drei zuvor genannten Bedingungen hinsichtlich der Anteile an Oligomeren.

Besonders bevorzugt ist Phenoxyphosphazen (alle R = Phenoxy, Formel 13g), alleine oder mit weiteren Phosphazenen gemäß Formel (13) als Komponente C, mit einem Anteil an Oligomeren mit k = 1 (Hexaphenoxyphosphazen) von 50 bis 98 mol-%, besonders bevorzugt 60 bis 72 Gew.-%, bezogen auf die Menge des Phenoxyphosphazens, als Komponente C enthalten. Sofern Phenoxyphosphazen eingesetzt wird, beträgt ganz besonders bevorzugt der Anteil an Oligomeren mit k = 2: 15 bis 22 Gew.-% und mit k ≥ 3: 10 bis 13 Gew.-%.

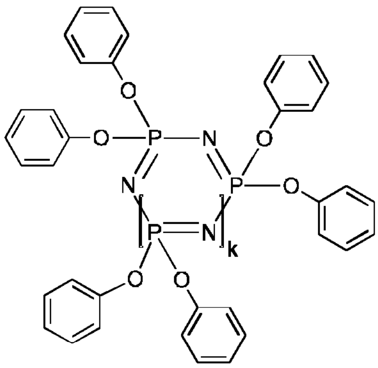

(13g)

Alternativ ganz besonders bevorzugt umfasst, ganz besonders bevorzugt ist die Komponente C ein Phenoxyphosphazen mit einem Trimerenanteil (k = 1) von 70 bis 85 mol-%, einem Tetramerenanteil (k = 2) von 10 bis 20 mol-%, einem Anteil an höheren oligomeren Phosphazenen (k = 3, 4, 5, 6 und 7) von 3 bis 8 mol-% und Phosphazen-Oligomeren mit k ≥ 8 von 0,1 bis 1 mol-%, bezogen auf die Komponente C.

In einer alternativen bevorzugten Ausführungsform ist n, definiert als der arithmetische Mittelwert von k, im Bereich von 1,10 bis 1,75, bevorzugt von 1,15 bis 1,50, weiter bevorzugt von 1,20 bis 1,45, und besonders bevorzugt von 1,20 bis 1,40 (Bereichsgrenzen eingeschlossen).

$$n = \frac{\sum_{i=1}^{max} k_i \cdot x_i}{\sum_{i=1}^{max} x_i}$$

(14)

Die Phosphazene und deren Herstellung sind beispielsweise in EP 728 811 A2, DE 1961668 A und WO 97/40092 A1 beschrieben.

Die Oligomer-Zusammensetzungen in den jeweiligen Blendproben lassen sich nach Compoundieren mittels $^{31}$P-NMR nachweisen und quantifizieren (chemische Verschiebung; δ trimer: 6,5 bis 10,0 ppm; δ tetramer: -10 bis -13,5 ppm; δ höhere Oligomere: -16,5 bis -25,0 ppm).

Ganz besonders bevorzugt umfasst Komponente C auf Bisphenol-A basierendes Oligophosphat gemäß Formel (12) und/oder cyclisches Phosphazen gemäß Formel (13), höchst bevorzugt ist Komponente C auf Bisphenol-A basierendes Oligophosphat gemäß Formel (12) und/oder cyclisches Phosphazen gemäß Formel (13), äußerst bevorzugt ist Komponente C cyclisches Phosphazen gemäß Formel (13).

Der Anteil von phosphorhaltigem Flammschutzmittel in den erfindungsgemäßen Zusammensetzungen beträgt 6 Gew.-% bis 14 Gew.-%, bevorzugt 7,0 Gew.-% bis 12,0 Gew.-%, besonders bevorzugt 8 bis 10 Gew.-%, bezogen auf die Gesamtzusammensetzung.

Dabei beträgt der Quotient aus der Menge aus Komponente C, also phosphorhaltigem Flammschutzmittel, und der Menge von Komponente A, also aromatischem Polycarbonat, bezogen auf die Gesamtzusammensetzung, multipliziert mit 100, > 10,0, bevorzugt ≥ 10,7, besonders bevorzugt bis 25.

Wenn der Talk-Gehalt > 37 Gew.-% , bevorzugt > 35,5 Gew.-%, besonders bevorzugt > 35 Gew.-% ist, beträgt der Phosphazen-Gehalt > 10,0 Gew.-%, bevorzugt mindestens 12 Gew.-%.

**Komponente D**

Die erfindungsgemäßen Zusammensetzungen enthalten als Komponente D ein fluorhaltiges Antitropfmittel, wobei es sich um eine Mischung mehrerer Antitropfmittel handeln kann. Die Menge an Antitropfmittel (Antidrippingmittel) insgesamt beträgt 0,3 Gew.-% bis 2,0 Gew.-%, bevorzugt 0,4 Gew.-% bis 1,6 Gew.-%, besonders bevorzugt 0,045 Gew.-% bis 1,0 Gew.-% mindestens eines Antitropfmittels.

Bevorzugt wird als Antitropfmittel fluorhaltiges Polymer, insbesondere Polyolefin, eingesetzt.

Die als Antitropfmittel bevorzugt eingesetzten fluorierten Polyolefine sind hochmolekular und besitzen Glasübergangstemperaturen von über -30°C, in der Regel von über 100°C, Fluorgehalte vorzugsweise von 65 Gew.-% bis 76 Gew.-%, insbesondere von 70 bis 76 Gew.-%. Bevorzugte fluorierte Polyolefine sind Polytetrafluorethylen, Polyvinylidenfluorid, Tetrafluorethylen/Hexafluorpropylen- und Ethylen/Tetrafluorethylen-Copolymerisate. Die fluorierten Polyolefine sind bekannt (vgl. "Vinyl and Related Polymers" von Schildknecht, John Wiley & Sons, Inc., New York, 1962, Seite 484-494; "Fluorpolymers" von Wall, Wiley-Interscience, John Wiley & Sons, Inc., New York, Band 13, 1970, Seite 623-654;

"Modern Plastics Encyclopedia", 1970-1971, Band 47, No. 10 A, Oktober 1970, Mc Graw-Hill, Inc., New York, Seite 134 und 774; "Modern Plastics Encyclopedia", 1975-1976, Oktober 1975, Band 52, Nr. 10 A, Mc Graw-Hill, Inc., New York, Seite 27, 28 und 472 und US 3 671 487 A, 3 723 373 A und 3 838 092 A). Sie können nach bekannten Verfahren hergestellt werden, so beispielsweise durch Polymerisation von Tetrafluorethylen in wässrigem Medium mit einem freie Radikale bildenden Katalysator, beispielsweise Natrium-, Kalium- oder Ammoniumperoxidisulfat bei Drucken von 7 bis 71 $kg/cm^2$ und bei Temperaturen von 0 bis 200°C, vorzugsweise bei Temperaturen von 20 bis 100°C. Nähere Einzelheiten sind z.B. in US 2 393 967 A beschrieben.

Je nach Einsatzform kann die Dichte der fluorierten Polyolefine zwischen 1,2 und 2,3 $g/cm^3$, bevorzugt 2,0 $g/cm^3$ bis 2,3 $g/cm^3$, bestimmt nach ISO 1183-1 (2019-09), die mittlere Teilchengröße zwischen 0,05 und 1000 $\mu$m, bestimmt mittels Lichtmikroskopie oder Weißlichtinterferometrie, liegen.

Geeignete Tetrafluorethylenpolymerisat-Pulver sind handelsübliche Produkte und werden beispielsweise von der Firma DuPont unter dem Handelsnamen Teflon® angeboten.

Besonders bevorzugt wird Polytetrafluorethylen (PTFE), als solches, aber auch in Form einer PTFE-haltigen Zusammensetzung als fluorhaltiges Antitropfmittel eingesetzt. Wird eine PTFE-haltige Zusammensetzung eingesetzt, so beträgt deren Mindesteinsatzmenge so viel, dass mindestens 0,2 Gew.-%, bevorzugt mindestens 0,21 Gew.-%, besonders bevorzugt mindestens 0,25 Gew PTFE in der Gesamtzusammensetzung enthalten sind. Zu den PTFE-haltigen Zusammensetzungen zählen Hostaflon® TF2021 oder aber PTFE-Blends wie Blendex® B449 (ca. 50 Gew.-% PTFE und ca. 50 Gew.-% SAN [aus 80 Gew.-% Styrol und 20 Gew.-% Acrylnitril]) der Firma Chemtura. Ganz besonders bevorzugt wird als fluorhaltiges Antitropfmittel PTFE oder eine PTFE/SAN-Blend eingesetzt.

**Komponente E**

Komponente E der erfindungsgemäßen Zusammensetzungen ist ein Anhydrid-modifiziertes $\alpha$-Olefin-Polymer.

Das $\alpha$-Olefin-Polymer basiert vorzugsweise auf mindestens einem Monomer, ausgewählt aus der Gruppe, bestehend aus Ethylen, 1-Propen, 1-Buten, 1-Isobuten, 1-Penten, 1-Hexen, 1-Hepten, 1-Octen, 1-Nonen, 1-Decen, 1-Undecen, 1-Dodecen, 1-Tridecen, 1-Tetradecen, 1-Octadecen, 1-Nonadecen, kann aber auch auf Gemischen aus diesen Monomeren basieren. Weiter bevorzugt basiert das $\alpha$-Olefin-Polymer auf mindestens einem Monomer, ausgewählt aus der Gruppe, bestehend aus Ethen, Propen, 1-Hexen, 1-Octen. Besonders bevorzugt basiert das $\alpha$-Olefin-Polymer auf Ethylen, Propen und/oder 1-Octen.

"Basierend auf" bedeutet in diesem Zusammenhang, dass bevorzugt mindestens 90 Gew.-%, weiter bevorzugt mindestens 95 Gew.-%, besonders bevorzugt mindestens 98 Gew.-%, bezogen auf das Gesamtgewicht des jeweiligen $\alpha$-Olefin-Polymers, ohne Anhydrid-Modifizierung, in der Polycarbonat-haltigen Zusammensetzung, des $\alpha$-Olefin-Polymers aus dem bzw. den jeweiligen Monomer/Monomeren gebildet sind.

Das $\alpha$-Olefin-Polymer ist mit einem Anhydrid modifiziert, wobei zur Modifizierung ein ungesättigtes Carbonsäureanhydrid verwendet wird. Das Carbonsäureanhydrid ist vorzugsweise ausgewählt aus der Gruppe, bestehend aus Maleinsäureanhydrid, Phthalsäureanhydrid, Fumarsäureanhydrid, Itaconsäureanhydrid und deren Mischungen. Besonders bevorzugt ist Maleinsäureanhydrid.

Das Anhydrid-modifizierte $\alpha$-Olefin-Polymer ist bevorzugt frei von Styrol-Butadien-Kautschuk, ganz besonders bevorzugt kautschukfrei.

Ein bevorzugtes Anhydrid-modifiziertes $\alpha$-Olefin-Polymer umfasst

E1) 90,0-99,5 Gew.-%, vorzugsweise 92,0-97,5 Gew.-%, weiter bevorzugt 94,0-97,0 Gew.-% $\alpha$ -Olefin-Polymer und

E2) 0,5-10,0 Gew.-%, weiter bevorzugt 2,5-8,0 Gew.-%, noch weiter bevorzugt 3,0-6,0 Gew.-% Anhydrid.

Dabei ist der olefinische Teil E1) des $\alpha$-Olefin-Polymers ist ganz besonders bevorzugt dadurch gekennzeichnet, dass

der Ethylen-Anteil 65,0-96,0 Gew.-%, weiter bevorzugt 80,0-96,0 Gew.-%, ganz besonders bevorzugt 84,0-92,0 Gew.-%,
der Propylen-Anteil 2,0-10,0 Gew.-%, ganz besonders bevorzugt 4,0-8,0 Gew.-% und
der 1-Octen-Anteil 2,0-25,0 Gew.-%, weiter bevorzugt 2,0-10,0 Gew.-%, ganz besonders bevorzugt 4,0-8,0 Gew.-%, beträgt.

Ganz besonders bevorzugt basiert das $\alpha$-Olefin-Polymer auf keinen weiteren Monomeren.

Alternativ bevorzugt basiert der olefinische Teil C1) des alpha-Olefin-Polymers auf Propylen und/oder Ethylen, besonders bevorzugt nur auf Propylen, ganz besonders bevorzugt zu mindestens 98 Gew.-%.

Das mittlere Molekulargewicht $M_W$ des Anhydrid-modifizierten $\alpha$-Olefin-Polymers beträgt bevorzugt 300 bis

40000 g/mol, weiter bevorzugt 800 bis 32000 g/mol, noch weiter bevorzugt 1000 bis 22000 g/mol, besonders bevorzugt 3000 bis 21000 g/mol. Das Molekulargewicht $M_W$ wird bestimmt mittels Gelpermeationschromatographie in ortho-Dichlorbenzol bei 150 °C mit Polystyrolkalibrierung. Hierbei ist der angegebene Wert bevorzugt der Mittelwert aus einer Doppelbestimmung.

Die Säurezahl des Anhydrid-modifizierten α-Olefin-Polymers beträgt vorzugsweise mindestens 30 mg KOH/g, weiter bevorzugt 45 bis 170 mg KOH/g, besonders bevorzugt bis 80 mg KOH/g, bestimmt gemäß DIN ISO 17025:2005-08 mittels potentiometrischer Titration mit alkoholischer Kaliumhydroxid-Lösung.

Ganz besonders bevorzugt basiert das Anhydrid-modifizierte α-Olefin-Polymer gemäß Komponente C auf Propen, ist Maleinsäureanhydrid-modifiziert und weist weiter bevorzugt ein mittleres Molekulargewicht $M_W$, bestimmt mittels Gelpermeationschromatographie in ortho-Dichlorbenzol bei 150 °C mit Polystyrolkalibrierung, von 1000 bis 22000 g/mol, noch weiter bevorzugt 3000 bis 21000 g/mol, und eine Säurezahl von 45 bis 170 mg KOH/g, noch weiter bevorzugt von 50 bis 100 mg KOH/g, bestimmt gemäß DIN ISO 17025:2005-08 mittels potentiometrischer Titration, auf.

Die Menge an Anhydrid-modifiziertem α-Olefin-Polymer in der Gesamtzusammensetzung beträgt 1 Gew.-% bis 3 Gew.-%, bevorzugt 1,2 Gew.-% bis 2,5 Gew.-%, weiter bevorzugt 1,3 Gew.-% bis 2,3 Gew.-%, besonders bevorzugt 1,5 Gew.-% bis 2 Gew.-%, insbesondere bis 2,0 Gew.-%.

**Weitere Additive (Komponente F)**

Die erfindungsgemäßen Polycarbonat-Zusammensetzungen können ein oder mehrere von den Komponenten B, C, D und E verschiedene, weitere Additive enthalten, welche vorliegend unter "Komponente F" zusammengefasst sind.

Es sind optional (0 Gew.-%), bevorzugt bis 10 Gew.-%, noch weiter bevorzugt 0,1 Gew.-% bis 5 Gew.-%, besonders bevorzugt 0,1 Gew.-% bis 3 Gew.-%, ganz besonders bevorzugt 0,2 Gew.-% bis 1,0 Gew.-% sonstige übliche Additive ("weitere Additive") enthalten, wobei sich diese Gewichtsprozente auf das Gesamtgewicht der Zusammensetzung beziehen. Die Gruppe der weiteren Additive umfasst keinen Talk und kein phosphorhaltiges Flammschutzmittel gemäß Komponente C. Die Gruppe der weiteren Additive umfasst auch kein fluorhaltiges Antitropfmittel, da dieses bereits als Komponente D beschrieben ist, und auch kein Anhydrid-modifiziertes α-Olefin-Polymer gemäß Komponente E.

Solche weiteren Additive, wie sie üblicherweise Polycarbonaten zugesetzt werden, sind insbesondere Thermostabilisatoren, Antioxidantien, Entformungsmittel, UV-Absorber, IR-Absorber, Schlagzähmodifikatoren, Antistatika, von Komponente C verschiedene Flammschutzmittel, optische Aufheller, Lichtstreumittel, Hydrolysestabilisatoren, Umesterungsstabilisatoren, (organische) Farbstoffe, (organische/anorganische) Pigmente, z.B. Titandioxid, Verträglichkeitsvermittler und/oder Additive zur Lasermarkierung, insbesondere in den für Polycarbonat-basierte Zusammensetzungen üblichen Mengen. Derartige Additive sind beispielsweise in EP 0 839 623 A1, WO 96/15102 A1, EP 0 500 496 A1 oder im "Plastics Additives Handbook", Hans Zweifel, 5th Edition 2000, Hanser Verlag, München beschrieben. Diese Additive können einzeln oder auch im Gemisch zugesetzt werden und sind erfindungsgemäß bevorzugte Additive.

Weiter bevorzugt sind als weitere Additive, sofern überhaupt weitere Additive vorhanden sind, ein oder mehrere weitere Additive, ausgewählt aus der Gruppe, bestehend aus Thermostabilisatoren, Antioxidantien, Entformungsmitteln, organischen Farbstoffen, organischen Pigmenten, anorganischen Pigmenten, enthalten, äußerst bevorzugt keine weiteren Additive. Der Anteil der weiteren Additive beträgt hierbei insbesondere bevorzugt 0 bis 3 Gew.-%. Ganz besonders bevorzugt ist als weiteres Additiv mindestens ein Thermostabilisator, ein Antioxidationsmittel und/oder ein Entformungsmittel enthalten, ganz besonders bevorzugt ein Thermostabilisator.

Es versteht sich, dass nur solche Additive und nur in solchen Mengen zugesetzt werden dürfen, wenn sie sich nicht signifikant negativ auf den erfindungsgemäßen Effekt des hohen CTI und der guten Flammwidrigkeit auswirken und bevorzugt auch die Vicat-Temperatur, bestimmt nach ISO 306:2014-3, VST Methode B, nicht unter 107°C, bevorzugt nicht unter 120°C abgesenkt wird. Besonders bevorzugt sind daher außer den phosphorhaltigen Flammschutzmitteln gemäß Komponente C nicht mehr als 0,05 Gew.-% weitere Flammschutzmittel enthalten. Ganz besonders bevorzugt sind gar keine weiteren Flammschutzmittel enthalten.

Die erfindungsgemäßen Zusammensetzungen können neben Komponente C zwar weitere Flammschutzmittel enthalten, sind aber frei von solchen, ausgewählt aus der Gruppe der Alkali-, Erdalkali- oder Ammoniumsalze von aliphatischen oder aromatischen Sulfonsäure-, Sulfonamid-, Sulfonimidderivaten und Kombinationen von diesen, wobei unter "Derivaten" solche Verbindungen verstanden werden, deren Molekülstruktur an der Stelle eines H-Atoms oder einer funktionellen Gruppe ein anderes Atom oder eine andere Atomgruppe besitzt bzw. bei denen ein oder mehrere Atome/Atomgruppen entfernt wurden. Die Stammverbindung ist somit noch weiterhin erkennbar.

Derartige Flammschutzmittel, die in erfindungsgemäßen Zusammensetzungen nicht enthalten sind, sind insbesondere ein oder mehrere Verbindungen, ausgewählt aus der Gruppe, bestehend aus Natrium- oder Kaliumperfluorbutansulfat, Natrium- oder Kaliumperfluormethansulfonat, Natrium- oder Kaliumperfluoroctansulfat, Natrium- oder Kalium-2,5-dichlorbenzolsulfat, Natrium- oder Kalium-2,4,5-trichlorbenzolsulfat, Natrium- oder Kaliumdiphenylsulfonsulfonat, Natrium- oder Kalium-2-formylbenzolsulfonat, Natrium- oder Kalium-(N-benzolsulfonyl)-benzolsulfonamid oder deren Mischungen, hiervon besonders bevorzugt Natrium- oder Kaliumperfluorbutansulfat, Natrium- oder Kaliumperfluoroctansulfat, Natrium- oder Kaliumdiphenylsulfonsulfonat oder deren Mischungen, insbesondere Kaliumperfluor-1-butansulfonat, welches kommerziell erhältlich ist, unter anderem als Bayowet® C4 von der Firma Lanxess, Leverkusen, Deutschland.

Besonders bevorzugt enthaltene Additive sind Entformungsmittel, weiter bevorzugt auf Basis eines Fettsäureesters, noch weiter bevorzugt auf Basis eines Stearinsäureesters, insbesondere bevorzugt auf Pentaerythritbasis. Besonders bevorzugt werden Pentaerythrittetrastearat (PETS) und/oder Glycerinmonostearat (GMS) eingesetzt. Sofern ein oder mehrere Entformungsmittel eingesetzt werden, beträgt die Menge bevorzugt bis 1,0 Gew.-% (einschließlich), weiter bevorzugt 0,01 bis 0,7 Gew.-%, besonders bevorzugt 0,02 bis 0,60 Gew.-%, jeweils bezogen auf die Gesamtzusammensetzung.

Besonders bevorzugt enthaltene Additive sind auch Thermostabilisatoren. Die Menge an Thermostabilisator beträgt bevorzugt bis 0,20 Gew.-%, weiter bevorzugt 0,01 bis 0,10 Gew.-%, noch weiter bevorzugt 0,01 bis 0,05 Gew.-%, besonders bevorzugt 0,015 bis 0,040 Gew.-%, bezogen auf die Gesamtzusammensetzung.

Als Thermostabilisatoren sind insbesondere Phosphor-basierte Stabilisatoren, ausgewählt aus der Gruppe der Phosphate, Phosphite, Phosphonite, Phosphine und deren Mischungen, geeignet. Beispiele sind Triphenylphosphit, Diphenylalkylphosphit, Phenyldialkylphosphit, Tris(nonylphenyl)phosphit, Trilaurylphosphit, Trioctadecylphosphit, Distearylpentaerythritoldiphosphit, Tris(2,4-di-tert-butylphenyl)phosphit (Irgafos® 168), Diisodecylpentaerythritoldiphosphit, Bis(2,4-di-tert-butylphenyl)pentaerythritoldiphosphit, Bis(2,4-di-cumylphenyl)pentaerythritoldiphosphit (Doverphos® S-9228), Bis(2,6-di-tert-butyl-4-methylphenyl)penta-erythritol-diphosphit, Diisodecyloxypentaerythritoldiphosphit, Bis(2,4-di-tert-butyl-6-methylphenyl)-pentaerythritoldiphosphit, Bis(2,4,6-tris(tert-butylphenyl)pentaerythritoldiphosphit, Tristearylsorbitoltriphosphit, Tetrakis(2,4-di-tert-butylphenyl)-4,4'-biphenylendiphosphonit, 6-Isooctyloxy-2,4,8,10-tetra-tert-butyl-12H-dibenz[d,g]-1,3,2-dioxaphosphocin, Bis(2,4-di-tert-butyl-6-methylphenyl)methylphosphit, Bis(2,4-di-tert-butyl-6-methylphenyl)ethylphosphit, 6-Fluoro-2,4,8,10-tetra-tert-butyl-12-methyl-dibenz[d,g]-1,3,2-dioxaphosphocin, 2,2',2"-Nitrilo-[triethyltris(3,3',5,5'-tetra-tert-butyl-1,1'-biphenyl-2,2'-diyl)phosphit], 2-Ethylhexyl(3,3',5,5'-tetra-tert-butyl-1,1'-biphenyl-2,2'-diyl)phosphit, 5-Butyl-5-ethyl-2-(2,4,6-tri-tert-butylphenoxy)-1,3,2-dioxaphosphiran, Bis(2,6-di-ter-butyl-4-methylphenyl)pentaerythritol-diphosphit, Triphenylphosphin (TPP), Trialkylphenylphosphin, Bisdiphenylphosphino-ethan oder ein Trinaphthylphosphin. Sie werden allein oder im Gemisch, z. B. Irganox® B900 (Gemisch aus Irgafos® 168 und Irganox® 1076 im Verhältnis 4:1) oder Doverphos® S-9228 mit Irganox® B900 bzw. Irganox® 1076, eingesetzt. Insbesondere bevorzugt werden Triphenylphosphin (TPP), Irgafos® 168 oder Tris(nonylphenyl)phosphit oder deren Mischungen eingesetzt.

Ferner können phenolische Antioxidantien wie alkylierte Monophenole, alkylierte Thioalkylphenole, Hydrochinone und alkylierte Hydrochinone eingesetzt werden. Besonders bevorzugt werden Irganox® 1010 (Pentaerythrit-3-(4-hydroxy-3,5-di-tert-butylphenyl)propionat; CAS: 6683-19-8) und Irganox 1076® (Octadecyl-3-(3,5-di-tert-butyl-4-hydroxyphenyl)-propionat) eingesetzt, bevorzugt in Mengen von 0,05 - 0,5 Gew.-%.

Ferner können Sulfonsäureester oder Alkylphosphate, z. B. Mono-, Di- und/oder Trihexylphosphat, Triisoctylphosphat und/oder Trinonylphosphat, als Umesterungsinhibitoren zugegeben werden. Bevorzugt wird als Alkylphosphat Triisooctylphosphat (Tris-2-ethyl-hexyl-phosphat) verwendet. Es können auch Mischungen aus verschiedenen Mono-, Di- und Trialkylphosphaten verwendet werden. Triisooctylphosphat wird bevorzugt in Mengen von 0,003 Gew.-% bis 0,05 Gew.-%, weiter bevorzugt 0,005 Gew.-% bis 0,04 Gew.-% und besonders bevorzugt von 0,01 Gew.-% bis 0,03 Gew.-%, bezogen auf die Gesamtzusammensetzung, eingesetzt.

Beispiele für Schlagzähmodifikatoren sind: Kern-Schale-Polymerisate wie ABS oder MBS; Olefin-Acrylat-Copolymere wie z. B. Elvaloy®-Typen von DuPont oder Paraloid®-Typen von Dow; Siliconacrylatkautschuke wie z. B. die Metablen®-Typen von Mitsubishi Rayon Co., Ltd. Die erfindungsgemäßen Zusammensetzungen haben bereits ein hervorragendes Eigenschaftsprofil ohne zusätzliche Schlagzähmodifikatoren. Erfindungsgemäße Zusammensetzungen sind daher vorzugsweise frei von Schlagzähmodifikatoren.

Besonders bevorzugt sind neben dem Talk keine weiteren Füllstoffe, wie Bariumsulfat, in den erfindungsgemäßen Zusammensetzungen enthalten. Titandioxid wird hierbei nicht als "Füllstoff" angesehen, sondern als Weißpigment.

Die Herstellung der erfindungsgemäßen Polymer-Zusammensetzungen, enthaltend die vermischten Komponenten A, B, C, D, E und ggf. F sowie ggf. weitere Bestandteile, kann unter Verwendung von Pulvervormischungen erfolgen. Es können auch Vormischungen aus Granulaten oder Granulaten und Pulvern mit den erfindungsgemäßen Zusätzen verwendet werden. Es können auch Vormischungen verwendet werden, die aus Lösungen der Mischungskomponenten in geeigneten Lösungsmitteln, wobei gegebenenfalls in Lösung homogenisiert wird und das Lösungsmittel anschließend entfernt wird, hergestellt worden sind. Insbesondere können die als Komponente E bezeichneten Additive und auch weitere Bestandteile der erfindungsgemäßen Zusammensetzungen durch bekannte Verfahren oder als Masterbatch eingebracht werden. Die Verwendung von Masterbatchen ist insbesondere zum Einbringen von Additiven und weiteren Bestandteilen bevorzugt, wobei insbesondere Masterbatche auf Basis der jeweiligen Polymermatrix verwendet werden.

Die erfindungsgemäßen Zusammensetzungen können beispielsweise extrudiert werden. Nach der Extrusion

kann das Extrudat abgekühlt und zerkleinert werden. Die Zusammenführung und Durchmischung einer Vormischung in der Schmelze kann auch in der Plastifiziereinheit einer Spritzgussmaschine erfolgen. Hierbei wird die Schmelze im anschließenden Schritt direkt in einen Formkörper überführt.

Erfindungsgemäße Zusammensetzungen werden bevorzugt zur Herstellung von Formteilen für Bauteile aus dem EE-Bereich verwendet, insbesondere für Hochspannungsschalter, Wechselrichter, Relais, elektronische Verbinder, elektrische Verbinder, Schutzschalter, Bauteile für Photovoltaikanwendungen, elektrische Motoren, Kühlkörper, Ladegeräte oder Ladestecker für elektrische Fahrzeuge, Elektroanschlusskästen, Smart Meter Gehäuse, Miniaturtrennschalter; Strom-Sammelschienen (bus bars). Gegenstand der Erfindung sind somit auch Formteile, welche Teil eines entsprechenden EE-Bauteils sind. "Teil" kann ein Einzelelement eines komplexen Erzeugnisses sein, aber ebenso auch das gesamte Element.

Gegenstand der Erfindung sind somit Formteile, bestehend aus oder umfassend Bereiche aus erfindungsgemäßen Zusammensetzungen, als auch entsprechende Bauteile, umfassend Elemente, also Formteile, welche aus erfindungsgemäßen Zusammensetzungen bestehen oder Bereiche, bestehend aus erfindungsgemäßen Zusammensetzungen, umfassen.

Ein Formteil im erfindungsgemäßen Sinn ist auch eine Isolationsschicht aus der erfindungsgemäßen Zusammensetzung. Eine solche kann beispielsweise auf einem Wechselrichter als Schicht zum Schutz gegen die äußeren Einflüsse vorgesehen sein. Für Wechselrichter sind Standardisolationsmaterialien solche mit einem CTI von 600 V. Auch kann die erfindungsgemäße Zusammensetzung als Isolationsschicht für andere elektrische Bauteile verwendet werden, z.B. Transistoren. Die Isolationsschicht schafft z.B. eine sichere Abgrenzung zwischen dem Transistor und einer metallischen Wärmesenke.

Dabei erfolgt der Einsatz der Formteile bestehend aus oder umfassend einen Bereich aus einer erfindungsgemäßen thermoplastischen Zusammensetzung bzw. von Schichten aus einer erfindungsgemäßen thermoplastischen Zusammensetzung bevorzugt bei solchen EE-Bauteilen, die auf eine Betriebsspannung von mindestens 375 V, bevorzugt von mindestens 400 V ausgelegt ist. Es kann aber ebenso auf eine haushaltsübliche Betriebsspannung von in Europa 230 V $\pm$ 23 V ausgelegt sein, allerdings können nun niedrigere Abstände zwischen den elektrischen Leitern realisiert werden.

Die hohe Kriechstromfestigkeit der erfindungsgemäßen Polycarbonat-Zusammensetzungen ermöglicht es, unter Verwendung von dem Polycarbonat-Material zwischen zwei elektrischen Leitern eines Bauteils geringere Abstände zu realisieren, als es bisher bei Einsatz von Polycarbonat möglich gewesen ist.

Gegenstand der Erfindung ist somit auch ein EE-Bauteil, umfassend einen ersten elektrischen Leiter und einen zweiten elektrischen Leiter in einem ersten Abstand d1 und einem zweiten Abstand d2 zueinander,

welche über ein Element aus einer erfindungsgemäßen thermoplastischen Zusammensetzung, die in direktem Kontakt mit dem ersten elektrischen Leiter und dem zweiten elektrischen Leiter steht, verbunden sind,
wobei der Abstand d1 die kürzeste Strecke zwischen dem ersten elektrischen Leiter und dem zweiten elektrischen Leiter entlang der Oberfläche des Elements aus der thermoplastischen Zusammensetzung ist und
wobei der Abstand d2 die kürzeste Strecke zwischen dem ersten elektrischen Leiter und dem zweiten elektrischen Leiter durch die Luft ist,
wobei d2 so ausgewählt ist, dass bei der jeweiligen Betriebsspannung ein Überschlag durch die Luft verhindert wird und
wobei d1 bei der nachfolgend aufgelisteten Betriebsspannung U beträgt:

d1i(0V $\leq$ U $\leq$ 250V): 1,8 mm bis < 2,5 mm

d1ii(250 V < U $\leq$ 500 V) = 3,6 mm bis < 5,0 mm

d1iii(500 V < U $\leq$ 1000 V) = 7,1 mm bis < 10,0 mm.

Derartig geringe Abstände sind nur mit einem Material, das mindestens einen CTI von 400 V aufweist, realisierbar.

"Element aus einer erfindungsgemäßen thermoplastischen Zusammensetzung" bedeutet hierbei, dass ein Element vorliegt, welches aus einer erfindungsgemäßen thermoplastischen Zusammensetzung besteht, die Zusammensetzung also nicht mit zusätzlichen Komponenten vermischt wurde.

Sofern das Material einen CTI von 600 V aufweist, sind noch geringere Abstände realisierbar, so dass d1 dann bei der aufgelisteten Betriebsspannung vorzugsweise beträgt:

d1i(0V $\leq$ U $\leq$ 250V): 1,3 mm bis < 2,5 mm,

d1ii(250 V < U $\leq$ 500 V) = 2,5 mm bis < 5,0 mm,

d1iii(500 V < U ≤ 1000 V) = 5,0 mm bis < 10,0 mm.

Besonders bevorzugt beträgt d1 bei Verwendung eines Materials mit einem CTI von 600V bei der aufgelisteten Betriebsspannung:

d1i(0V ≤ U ≤ 250V): 1,3 mm bis < 1,8 mm,

d1ii(250 V < U ≤ 500 V) = 2,5 mm bis < 3,6 mm,

d1iii(500 V < U ≤ 1000 V) = 5,0 mm bis < 7,1 mm, Abstände, die auch mit einem Material mit einem CTI von 400 oder 450 V nicht realisierbar sind, sondern einen CTI von 600 V erfordern.

Gegenstand der Erfindung sind somit auch entsprechende EE-Bauteile, bei denen entsprechende Abstände realisiert sind und die bevorzugt eine anzulegende Betriebsspannung von mindestens 375 V, bevorzugt von mindestens 400 V, besonders bevorzugt von mindestens 600V aufweisen.

Die Auswahl von d2 liegt im Rahmen des Könnens des Fachmanns. Bevorzugt beträgt d2 mindestens 1,2 mm.

Gegenstand der Erfindung ist ebenso die Verwendung erfindungsgemäßer Zusammensetzungen, auch in den als bevorzugt, besonders bevorzugt etc. beschriebenen Ausführungsformen, zur Realisierung der vorgenannten niedrigen Abständen zwischen elektrischen Leitern in EE-Bauteilen. Weiterhin ist Gegenstand der Erfindung die Verwendung erfindungsgemäßer Zusammensetzungen zur Erzielung eines CTI von mindestens 400 V, bevorzugt von mindestens 600 V, weiter bevorzugt in Kombination mit einer thermischen Leitfähigkeit (in plane) von mindestens 0,9 W/(mK), bestimmt gemäß ASTM E 1461-13. Es versteht sich, dass die als bevorzugt, weiter bevorzugt, besonders bevorzugt etc. bezeichneten Ausführungsformen der erfindungsgemäßen Zusammensetzung auch für die erfindungsgemäßen Verwendungen gelten.

Bekanntlich hat der Verschmutzungsgrad Auswirkungen auf die elektrische Leitfähigkeit. Die genannten Abstände d1 und d2 sind in der Praxis nutzbar bei Bauteilen, bei denen, z.B. aufgrund baulicher Abschirmung, eine Schutzart IP6K9K nach ISO 20653:2013-02 eingehalten wird.

Erfindungsgemäß bevorzugte thermoplastische Zusammensetzungen gehören zur Isolierstoffgruppe II (400 V ≤ CTI < 600 V), ganz besonders bevorzugte Zusammensetzungen gehören zur Isolierstoffgruppe I (600 V ≤ CTI), eingestuft nach DIN EN 60664-1:2008.

Sie weisen eine thermische Leitfähigkeit (in plane) von bevorzugt mindestens 0,9 W/(mK), bestimmt gemäß ASTM E 1461-13, auf, so dass zudem eine gute Wärmeabfuhr gelingen kann.

Nachfolgend werden verschiedene Ausführungsformen der vorliegenden Erfindung beschrieben:

1. Thermoplastische Zusammensetzung, enthaltend

A) mindestens 44,5 Gew.-% aromatisches Polycarbonat, wobei das aromatische Polycarbonat eine oder mehrere Monomereinheiten der Formel (1a)

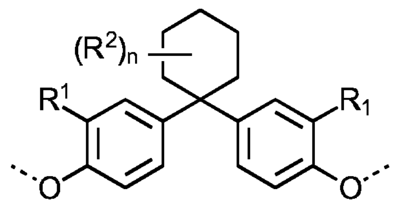

(1a)

,

in der

$R^1$ für Wasserstoff oder einen $C_1$- bis $C_4$-Alkylrest steht,
$R^2$ für einen $C_1$- bis $C_4$-Alkylrest steht,

n für 0, 1, 2 oder 3 steht,
in einem Anteil von 30 - 65 Gew.-%, bezogen auf das Gesamtgewicht des aromatischen Polycarbonats, enthält,
B) 30 bis 40 Gew.-% Talk,

C) 6 bis 14 Gew.-% phosphorhaltiges Flammschutzmittel, wobei der Quotient aus

der Menge von Komponente C, bezogen auf die Gesamtzusammensetzung, und
der Menge aus Komponente A, bezogen auf die Gesamtzusammensetzung,
multipliziert mit 100,
> 10,0 beträgt,

D) 0,3 bis 2,0 Gew.-% fluorhaltiges Antitropfmittel,
E) 1 bis 3 Gew.-% Anhydrid-modifiziertes $\alpha$-Olefin-Polymer,

wobei, wenn der Talk-Gehalt < 35,0 Gew.-% ist, der Anteil der Monomereinheiten der Formel (1a), bezogen auf das Gesamtgewicht des aromatischen Polycarbonats, mindestens 35 Gew.-% beträgt und
wobei, wenn der Talk-Gehalt > 37 Gew.-% ist, der Phosphazen-Gehalt > 10,0 Gew.-% ist.

2. Thermoplastische Zusammensetzung nach Ausführungsform 1, wobei der Anteil der Monomereinheiten der Formel (1a), bezogen auf das Gesamtgewicht des aromatischen Polycarbonats, 40 bis 60 Gew.-%, insbesondere 40 bis 50 Gew.-% beträgt.

3. Thermoplastische Zusammensetzung nach Ausführungsform 1 oder 2, wobei der Talk-Gehalt der thermoplastischen Zusammensetzung 30 bis 35 Gew.-% beträgt.

4. Thermoplastische Zusammensetzung nach einer der vorhergehenden Ausführungsformen, wobei die Menge an fluorhaltigem Antitropfmittel 0,4 bis 1,0 Gew.-% beträgt.

5. Thermoplastische Zusammensetzung nach einer der vorhergehenden Ausführungsformen, wobei der Gehalt an aromatischem Polycarbonat mindestens 50 Gew.-% beträgt.

6. Thermoplastische Zusammensetzung nach Ausführungsform 1 oder einer der Ausführungsformen 3 bis 5, wobei der Anteil der Monomereinheiten der Formel (1a), bezogen auf das Gesamtgewicht des aromatischen Polycarbonats, bis 60 Gew.-%, bezogen auf das Gesamtgewicht an aromatischem Polycarbonat, beträgt.

7. Thermoplastische Zusammensetzung nach einer der vorhergehenden Ausführungsformen, wobei das phosphorhaltige Flammschutzmittel ein Phosphazen oder eine Mischung aus verschiedenen Phosphazenen ist.

8. Thermoplastische Zusammensetzung nach einer der vorhergehenden Ausführungsformen, wobei das Anhydrid-modifizierte $\alpha$-Olefin-Polymer Maleinsäureanhydrid-modifiziertes Propylen-Polymer umfasst.

9. Thermoplastische Zusammensetzung nach einer der vorhergehenden Ausführungsformen, wobei die Zusammensetzung 0,2 bis 2,0 Gew.-% Titandioxid enthält.

10. Thermoplastische Zusammensetzung nach einer der vorhergehenden Ausführungsformen, wobei, wenn der Talk-Gehalt < 35 Gew.-% ist, der Anteil der Monomereinheiten der Formel (1a), bezogen auf das Gesamtgewicht des aromatischen Polycarbonats, mindestens 40 Gew.-% beträgt.

11. Thermoplastische Zusammensetzung nach einer der vorhergehenden Ausführungsformen, wobei der Quotient aus der Menge von Komponente C, bezogen auf die Gesamtzusammensetzung, und der Menge aus Komponente A, bezogen auf die Gesamtzusammensetzung, multipliziert mit 100, $\geq$ 10,7 beträgt.

12. Thermoplastische Zusammensetzung nach einer der vorhergehenden Ausführungsformen, wobei der Quotient aus der Menge von Komponente C, bezogen auf die Gesamtzusammensetzung, und der Menge aus Komponente A, bezogen auf die Gesamtzusammensetzung, multipliziert mit 100, $\leq$ 25 beträgt.

13. Thermoplastische Zusammensetzung nach einer der vorhergehenden Ausführungsformen, wobei, wenn der Talk-Gehalt > 35,5 Gew.-% ist, der Phosphazen-Gehalt > 10,0 Gew.-%, bevorzugt mindestens 12 Gew.-%, beträgt.

14. Thermoplastische Zusammensetzung nach einer der vorhergehenden Ausführungsformen, enthaltend

A) mindestens 50 Gew.-% aromatisches Polycarbonat, wobei das aromatische Polycarbonat eine oder mehrere

Monomereinheiten der Formel (1a)

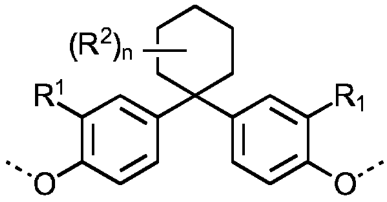

(1a)

,

in der

$R^1$ für Wasserstoff oder einen $C_1$- bis $C_4$-Alkylrest steht,
$R^2$ für einen $C_1$- bis $C_4$-Alkylrest steht,

n für 0, 1, 2 oder 3 steht,
in einem Anteil von 30 bis 65 Gew.-%, bevorzugt bis 60 Gew.-%, bezogen auf das Gesamtgewicht des aromatischen Polycarbonats, enthält,
B) 30 bis 35 Gew.-% Talk,
C) 6 bis 12 Gew.-% phosphorhaltiges Flammschutzmittel, wobei der Quotient aus

der Menge von Komponente C, bezogen auf die Gesamtzusammensetzung, und
der Menge aus Komponente A, bezogen auf die Gesamtzusammensetzung,
multipliziert mit 100,
> 10,0 beträgt,

D) 0,3 bis 2,0 Gew.-% fluorhaltiges Antitropfmittel,
E) 1 bis 3 Gew.-% Anhydrid-modifiziertes $\alpha$-Olefin-Polymer,

wobei, wenn der Talk-Gehalt < 35,0 Gew.-% ist, der Anteil der Monomereinheiten der Formel (1a), bezogen auf das Gesamtgewicht des aromatischen Polycarbonats, mindestens 35 Gew.-%, bevorzugt mindestens 40 Gew.-%, beträgt.

15. Thermoplastische Zusammensetzung nach der Ausführungsform 14, wobei der Anteil der Monomereinheiten der Formel (1a), bezogen auf das Gesamtgewicht des aromatischen Polycarbonats, 35 bis 45 Gew.-% beträgt und die Menge an phosphorhaltigem Flammschutzmittel 8 bis 10 Gew.-% beträgt.

16. Thermoplastische Zusammensetzung nach einer der Ausführungsformen 1 bis 13, bestehend aus

A) mindestens 44,5 Gew.-% aromatisches Polycarbonat, wobei das aromatische Polycarbonat eine oder mehrere Monomereinheiten der Formel (1a)

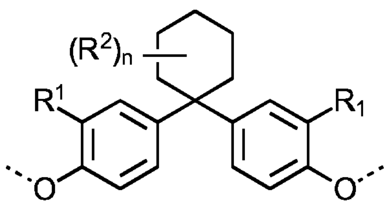

(1a)

,

in der

$R^1$ für Wasserstoff oder einen $C_1$- bis $C_4$-Alkylrest steht,
$R^2$ für einen $C_1$- bis $C_4$-Alkylrest steht,

n für 0, 1, 2 oder 3 steht,
in einem Anteil von 30 bis 65 Gew.-%, bezogen auf das Gesamtgewicht des aromatischen Polycarbonats, enthält,
B) 30 bis 40 Gew.-% Talk,
C) 6 bis 14 Gew.-% phosphorhaltiges Flammschutzmittel, wobei der Quotient aus

der Menge von Komponente C, bezogen auf die Gesamtzusammensetzung, und
der Menge aus Komponente A, bezogen auf die Gesamtzusammensetzung,
multipliziert mit 100,
> 10,0 beträgt,

D) 0,3 bis 2,0 Gew.-% fluorhaltiges Antitropfmittel,
E) 1 bis 3 Gew.-% Anhydrid-modifiziertes $\alpha$-Olefin-Polymer,
F) optional einem oder mehreren weiteren Additiv(en), ausgewählt aus der Gruppe, bestehend aus Thermostabilisatoren, Antioxidantien, Entformungsmitteln, UV-Absorbern, IR-Absorbern, Schlagzähmodifikatoren, Antistatika, von Komponente C verschiedenen Flammschutzmitteln, optischen Aufhellern, Lichtstreumitteln, Hydrolysestabilisatoren, Umesterungsstabilisatoren, organischen Farbstoffen, organischen oder anorganischen Pigmenten, Verträglichkeitsvermittlern, Additiven zur Lasermarkierung,

wobei, wenn der Talk-Gehalt < 35,0 Gew.-% ist, der Anteil der Monomereinheiten der Formel (1a), bezogen auf das Gesamtgewicht des aromatischen Polycarbonats, mindestens 35 Gew.-% beträgt und
wobei, wenn der Talk-Gehalt > 37 Gew.-% ist, der Phosphazen-Gehalt > 10,0 Gew.-% ist.

17. Thermoplastische Zusammensetzung nach einer der vorhergehenden Ausführungsformen, wobei das phosphorhaltige Flammschutzmittel ein cyclisches Phosphazen und/oder eine Phosphorverbindung der Formel (10) umfasst.

18. Thermoplastische Zusammensetzung nach einer der vorhergehenden Ausführungsformen, wobei das phosphorhaltige Flammschutzmittel ein cyclisches Phosphazen und/oder eine Phosphorverbindung der Formel (10) ist

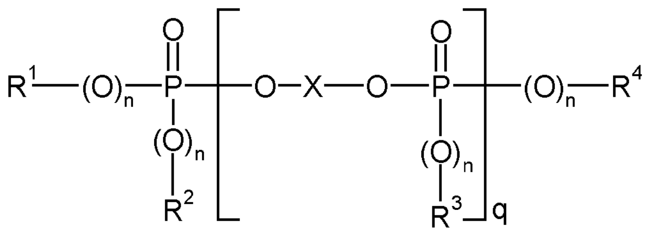

(10),

worin

$R^1$, $R^2$, $R^3$ und $R^4$ unabhängig voneinander für einen $C_1$- bis $C_8$-Alkylrest, jeweils gegebenenfalls halogeniert und jeweils verzweigt oder unverzweigt, und/oder $C_5$- bis $C_6$-Cycloalkylrest, $C_6$- bis $C_{20}$-Arylrest oder $C_7$- bis $C_{12}$-Aralkylrest, jeweils gegebenenfalls durch verzweigtes oder unverzweigtes Alkyl und/oder Halogen, vorzugsweise Chlor und/oder Brom, substituiert,
n unabhängig voneinander 0 oder 1,
q einen Wert von 0 bis 30 und
X einen ein- oder mehrkernigen aromatischen Rest mit 6 bis 30 C-Atomen oder einen linearen oder verzweigten aliphatischen Rest mit 2 bis 30 C-Atomen, der jeweils substituiert oder unsubstituiert, verbrückt oder unverbrückt sein kann, bedeuten.

19. Thermoplastische Zusammensetzung nach Ausführungsform 17 oder 18, wobei das cyclische Phosphazen ein Phosphazen der Formel (13) ist

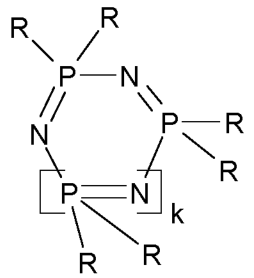

(13),

wobei

R jeweils gleich oder verschieden ist und für

- einen Aminrest,
- einen jeweils gegebenenfalls halogenierten, vorzugsweise mit Fluor halogenierten, weiter bevorzugt monohalogenierten, $C_1$- bis $C_8$-Alkylrest, vorzugsweise Methylrest, Ethylrest, Propylrest oder Butylrest,
- einen $C_1$- bis $C_8$-Alkoxyrest, vorzugsweise einen Methoxyrest, Ethoxyrest, Propoxyrest oder Butoxyrest,
- einen jeweils gegebenenfalls durch Alkyl, vorzugsweise $C_1$- bis $C_4$-Alkyl, und/oder Halogen, vorzugsweise Chlor und/oder Brom, substituierten $C_5$- bis $C_6$-Cycloalkylrest,
- einen jeweils gegebenenfalls durch Alkyl, vorzugsweise $C_1$- bis $C_4$-Alkyl, und/oder Halogen, vorzugsweise Chlor, Brom, und/oder Hydroxy-substituierten, $C_6$- bis $C_{20}$-Aryloxyrest, vorzugsweise Phenoxyrest, Naphthyloxyrest,
- einen jeweils gegebenenfalls durch Alkyl, vorzugsweise $C_1$- bis $C_4$-Alkyl, und/oder Halogen, vorzugsweise Chlor und/oder Brom, substituierten $C_7$- bis $C_{12}$-Aralkylrest, vorzugsweise Phenyl- $C_1$- bis $C_4$-alkylrest, oder
- einen Halogen-Rest, vorzugsweise Chlor oder Fluor, oder
- einen OH-Rest steht,

k für eine ganze Zahl von 1 bis 10, vorzugsweise für eine Zahl von 1 bis 8, besonders bevorzugt 1 bis 5, ganz besonders bevorzugt für 1, steht.

20. Thermoplastische Zusammensetzung nach Ausführungsform 17, 18 oder 19, wobei die Phosphorverbindung der Formel (10) ein Bisphenol A-basierendes Oligophosphat der Formel (12) ist

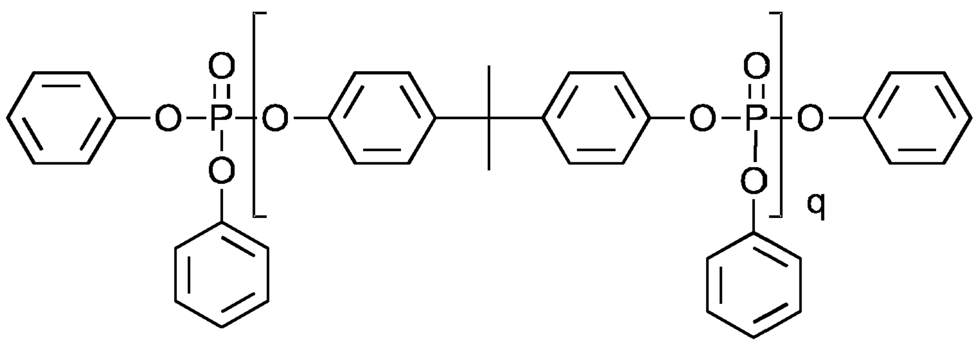

(12)

mit q = 1 bis 20, insbesondere mit q = 1,0 bis 1,2.

21. Thermoplastische Zusammensetzung nach einer der vorhergehenden Ausführungsformen, wobei das Anhydrid-modifizierte α-Olefin-Polymer gemäß Komponente C auf Propen basiert, Maleinsäureanhydrid-modifiziert ist und bevorzugt ein mittleres Molekulargewicht $M_W$, bestimmt mittels Gelpermeationschromatographie in ortho-Dichlorbenzol bei 150 °C mit Polystyrolkalibrierung, von 1000 bis 22000 g/mol, bevorzugt 3000 bis 21000 g/mol, und eine Säurezahl von 45 bis 170 mg KOH/g, bevorzugt von 50 bis 100 mg KOH/g, bestimmt gemäß DIN ISO 17025:2005-08 mittels potentiometrischer Titration, aufweist.

22. Thermoplastische Zusammensetzung nach einer der vorhergehenden Ausführungsformen, wobei die Monomereinheiten der Formel (1a) solche sind, bei denen $R^1$ für Wasserstoff steht, $R^2$ für einen Methylrest steht und n für 3 steht.

23. Thermoplastische Zusammensetzung nach einer der vorhergehenden Ausführungsformen, wobei das aromatische Polycarbonat APEC® ist oder APEC® umfasst.

24. Thermoplastische Zusammensetzung nach einer der vorhergehenden Ausführungsformen, wobei das aromatische Polycarbonat 40 bis 55 Gew.-%, insbesondere bis 50 Gew.-%, bezogen auf das Gesamtgewicht des aromatischen Polycarbonats, eine oder mehrere Monomereinheiten der Formel (1a)

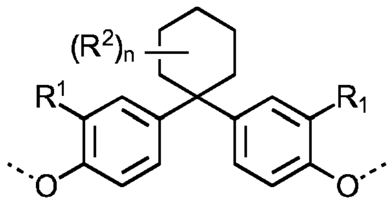

(1a)

,

in der

$R^1$ für Wasserstoff oder einen $C_1$- bis $C_4$-Alkylrest steht,
$R^2$ für einen $C_1$- bis $C_4$-Alkylrest steht,
n für 0, 1, 2 oder 3 steht, enthält.

25. Formteil bestehend aus oder umfassend einen Bereich aus einer thermoplastischen Zusammensetzung nach einer der vorhergehenden Ausführungsformen.

26. Formteil nach Ausführungsform 25, wobei das Formteil Teil eines Hochspannungsschalters, Wechselrichters, Relais, elektronischen Verbinders, elektrischen Verbinders, Schutzschalters, einer Photovoltaikanlage, eines elektrischen Motors, eines Kühlkörpers, eines Ladegerätes oder Ladesteckers für elektrische Fahrzeuge, eines Elektroanschlusskastens, eines Smart Meter Gehäuses, eines Miniaturtrennschalters, einer Strom-Sammelschiene ist.

27. EE-Bauteil, welches auf eine Betriebsspannung von mindestens 375 V ausgelegt ist, umfassend ein Formteil nach Ausführungsform 25 oder 26 oder eine Schicht aus einer thermoplastischen Zusammensetzung nach einer der Ausführungsformen 1 bis 24.

28. EE-Bauteil, welches auf eine Betriebsspannung von 400 V ausgelegt ist, umfassend ein Formteil nach Ausführungsform 24 oder 25 oder eine Schicht aus einer thermoplastischen Zusammensetzung nach einer der Ausführungsformen 1 bis 24.

29. EE-Bauteil, umfassend

einen ersten elektrischen Leiter und einen zweiten elektrischen Leiter in einem ersten Abstand d1 und einem zweiten Abstand d2 zueinander,
welche über ein Element aus einer thermoplastisches Zusammensetzung nach einer der Ausführungsformen 1 bis 24, die in direktem Kontakt mit dem ersten elektrischen Leiter und dem zweiten elektrischen Leiter steht, verbunden sind,
wobei der Abstand d1 die kürzeste Strecke zwischen dem ersten elektrischen Leiter und dem zweiten elektrischen Leiter entlang der Oberfläche des Elements aus der thermoplastischen Zusammensetzung ist und wobei der Abstand d2 die kürzeste Strecke zwischen dem ersten elektrischen Leiter und dem zweiten elektrischen Leiter durch die Luft ist,
wobei d2 so ausgewählt ist, dass bei der jeweiligen Betriebsspannung ein Überschlag durch die Luft verhindert wird und
wobei d1 bei der nachfolgend aufgelisteten Betriebsspannung U beträgt:

d1i(0V $\leq$ U $\leq$ 250V): 1,8 mm bis < 2,5 mm

d1ii(250 V < U $\leq$ 500 V) = 3,6 mm bis < 5,0 mm

d1iii(500 V < U $\leq$ 1000 V) = 7,1 mm bis < 10,0 mm.

30. EE-Bauteil umfassend

einen ersten elektrischen Leiter und einen zweiten elektrischen Leiter in einem ersten Abstand d1 und einem zweiten Abstand d2 zueinander,
welche über ein Element aus einer thermoplastisches Zusammensetzung nach einer der Ausführungsformen 1 bis 24, die in direktem Kontakt mit dem ersten elektrischen Leiter und dem zweiten elektrischen Leiter steht, verbunden sind,
wobei der Abstand d1 die kürzeste Strecke zwischen dem ersten elektrischen Leiter und dem zweiten elektrischen Leiter entlang der Oberfläche des Elements aus der thermoplastischen Zusammensetzung ist und wobei der Abstand d2 die kürzeste Strecke zwischen dem ersten elektrischen Leiter und dem zweiten elektrischen Leiter durch die Luft ist,
wobei d2 so ausgewählt ist, dass bei der jeweiligen Betriebsspannung ein Überschlag durch die Luft verhindert wird,
bevorzugt nach einer der Ausführungsformen 27 bis 28, wobei d1 bei der nachfolgend aufgelisteten Betriebsspannung U beträgt:

d1i(0V $\leq$ U $\leq$ 250V): 1,3 mm bis < 2,5 mm, bevorzugt < 1,8 mm,

d1ii(250 V < U $\leq$ 500 V) = 2,5 mm bis < 5,0 mm, bevorzugt < 3,6 mm,

d1iii(500 V < U $\leq$ 1000 V) = 5,0 mm bis < 10,0 mm, bevorzugt < 7,1 mm.

31. EE-Bauteil nach einer der Ausführungsformen 27 bis 30, wobei d2 $\geq$ 1,2 mm ist.

32. EE-Bauteil nach einer der Ausführungsformen 27 bis 31, wobei das EE-Bauteil ein Hochspannungsschalter, Wechselrichter, Relais, elektronischer Verbinder, elektrischer Verbinder, Schutzschalter, Teil einer Photovoltaikanlage, Teil eines elektrischen Motors, eines Kühlkörpers, eines Ladegerätes oder Ladesteckers für elektrische Fahrzeuge, Teil eines Elektroanschlusskastens, Teil eines Smart Meter Gehäuses, Teil eines Miniaturtrennschalters, Teil einer Stromsammelschiene ist.

33. EE-Bauteil nach einer der Ausführungsformen 27 bis 32, wobei eine Schutzart IP6K9K nach ISO 20653:2013-02 vorliegt.

**Beispiele:**

### 1. Beschreibung der Rohstoffe und Prüfmethoden

### a) Rohstoffe

**Komponente A-1:** Lineares Polycarbonat auf Basis von Bisphenol A mit einer Schmelzevolumenfließrate von 12 $cm^3$/(10 min) (gemäß ISO 1133:2012-03, bei einer Prüftemperatur 300°C und 1,2 kg Belastung), enthaltend als Komponente F-2 250 ppm ( = 0,025 Gew.-%, bezogen auf das Gesamtgewicht von Komponente A) Thermostabilisator Triphenylphosphin.

**Komponente A-2:** Lineares Copolycarbonat auf Basis von Bisphenol A und Bisphenol TMC (66 Gew.-%) mit einem MVR von 8 $cm^3$/10 min (330°C/2,16 kg, ISO 1133-1:2011) und einer Erweichungstemperatur (VST/B 120; ISO

306:2013) von 203°C.

**Komponente A-3:** Lineares Copolycarbonat auf Basis von Bisphenol A und Bisphenol TMC (13 Gew.-%) mit einem MVR von 45 $cm^3$/10 min (330°C/2,16 kg, ISO 1133-1:2011) und einer Erweichungstemperatur (VST/B 120; ISO 306:2013) von 158°C.

**Komponenente B-1:** Kompaktierter Talk mit einem Talkgehalt von 98 Gew.-%, einem Eisenoxidgehalt von 1,9 Gew.-%, einem Aluminiumoxidgehalt von 0,2 Gew.-%, Glühverlust (DIN 51081/1000 °C) von 5,4 Gew.-%, pH-Wert (nach EN ISO 787-9:1995) von 9,15, D(0,5) (Sedimentationsanalyse) von 2,2 μm; BET-Oberfläche nach ISO 4652:2012-06 10 $m^2$/g, Typ: Finntalc M05SLC, Hersteller: Mondo Minerals B. V.

**Komponente B*-2:** Glasfaser der Firma Nittobo (2-4-1, Kojimachi, Chiyoda-ku, Tokyo 102-8489, Japan) welche unter dem Handelsnamen CSG 3PA-830 verfügbar ist. Es handelt sich um eine Flachglas-Faser mit 3 mm Schnittlänge und einer Querschnittsverhältnis von 1,4.

**Komponente B*-3:** Gebranntes Siliciumdioxid Amosil FW 600 von Quarzwerke GmbH in Frechen, unbeschlichtet, mit einer mittleren Partikelgröße D(0,5) von ca. 4 μm, D(0,98) von ca. 13 μm, einem D(0,1)/D(0,9)-Verhältnis von ca. 1,5/10 sowie einer spezifischen Oberfläche von ca. 6 $m^2$/g, ermittelt nach DIN-ISO 9277:2014-01.

**Komponente C-1:** Phenoxycyclophosphazen Rabitle FP110 von Fushimi Pharmaceutical, Japan, Formel (13g), mit einem Trimerenanteil (k = 1) von etwa 68 mol-%.

**Komponente D-1:** In SAN-gekapseltes Polytetrafluorethylen ADS5000 (ca. 50 Gew.-% PTFE (fluorhaltiges Antitropfmittel) und ca. 50 Gew.-% SAN) der Firma Chemical Innovation Co., Ltd. Thailand.

**Komponente E-1:** Propylen-Maleinsäureanhydrid-Polymer mit einem mittleren Molekulargewicht (Gelpermeationschromatographie in ortho-Dichlorbenzol bei 150 °C mit Polystyrolkalibrierung) Mw = 20700 g/mol, Mn = 1460 g/mol, Säurezahl 78 mg KOH/g, bestimmt gemäß DIN ISO 17025:2005-08 mittels potentiometrischer Titration.

**Komponente F-1:** Titandioxid der Firma Kronos mit einem $D_{50}$ = 210 nm (Rasterelektronenmikroskopie, ECD-Methode; Kronos® 2230).

Der Bisphenol TMC-Gehalt ("TMC-%") gibt den Anteil (in Gew.-%) an Bisphenol TMC als Monomerbaustein im aromatischen Polycarbonat an.

**b) Prüfmethoden**

**Kriechstromfestigkeit ("comparative tracking index", CTI):**

Zur Ermittlung der Kriechstromfestigkeit wurden die hier beschriebenen Zusammensetzungen nach der Schnellprüfmethode in Anlehnung an die IEC 60112:2009 geprüft. Hierzu wurde eine 0,1%-ige Ammoniumchlorid Prüflösung (395 Ohm*cm Widerstand) tropfenweise zwischen zwei mit einem Abstand von 4 mm benachbarten Elektroden auf die Oberfläche von Prüfkörpern der Maße 60 mm x 40 mm x 4 mm im zeitlichen Abstand von 30s appliziert. Zwischen den Elektroden lag eine Prüfspannung an, die im Verlauf des Tests variiert wurde. Der erste Prüfkörper wurde bei einer Startspannung von 300 V bzw. 350 V getestet. Es wurden insgesamt maximal 50 Tropfen (ein Tropfen alle 30s) pro Spannung appliziert, so lange kein Kriechstrom > 0,5A über 2s auftrat oder die Probe gebrannt hat. Nach 50 Tropfen wurde die Spannung um 50 V erhöht und ein neuer Prüfkörper bei dieser höheren Spannung, gemäß dem zuvor beschriebenen Vorgehen, getestet. Dieser Prozess wurde so lange fortgesetzt, bis entweder 600 V erreicht waren oder ein Kriechstrom bzw. Brand auftrat. Sollte es bereits bei weniger als 50 Tropfen zu einem der zuvor genannten Effekte gekommen sein, wurde die Spannung um 25 V reduziert und ein neuer Prüfkörper bei dieser niedrigeren Spannung getestet. Die Spannung wurde so lange reduziert, bis der Test mit 50 Tropfen ohne Kriechstrom oder Brand bestanden wurde. Mit diesem Prozedere wurde also die maximal mögliche Spannung ermittelt, bei der eine Zusammensetzung 50 Tropfen der Prüflösung ohne Auftreten eines Kriechstroms widerstehen konnte. Abschließend wurden bei der ermittelten Maximalspannung zur Bestätigung vier weitere Prüfkörper mit jeweils 50 Tropfen getestet. Dieser bestätigte Wert wird in den Beispielen als CTI angegeben. Ein 100 Tropfen-Wert wurde nicht ermittelt, daher "Schnellprüfmethode in Anlehnung" an genannte Norm.

**Flammwidrigkeit:**

Die Prüfung der Flammwidrigkeit der Polycarbonat-Zusammensetzungen wurde gemäß Underwriter Laboratory Methode UL 94 V in Dicken von 1,5 mm - 3 mm durchgeführt. Die getesteten Prüfstäbe wurden zuvor für 7 Tage bei 50% relativer Luftfeuchte und 70°C Umgebungstemperatur konditioniert.

Unterschiedliche Brandklassen werden je nach Verhalten der Prüfkörper vergeben. Dazu zählen die Zeit bis zum Erlöschen der Flamme, Resistenz zum Abtropfen bzw. ob ein Material brennend abtropft. Die hiernach bestimmten Klassen werden mit V0, V1 und V2 bezeichnet und auf Basis von insgesamt fünf getesteten Prüfkörpern ermittelt.

**V0:** Der Prüfkörper, der mit seiner Längsachse 180° (vertikal) zur Flamme positioniert wird, hat eine durchschnittliche Nachbrennzeit nach Entfernen der Flamme von nicht mehr als 10s und produziert keine abtropfenden

Plastikpartikel, die eine unter dem Prüfkörper befindliche Watte entzünden. Die Gesamtnachbrennzeit von fünf Prüfkörpern, jeweils zweimal beflammt, liegt bei maximal 50s.

**V1:** Im Unterschied zu V0 liegt hier die durchschnittliche maximale Nachbrennzeit bei < 30s, wobei auch hier keine Partikel abtropfen und die Watte entzünden dürfen. Die Gesamtnachbrennzeit von fünf Prüfkörpern, jeweils zweimal beflammt, liegt bei < 250s.

**V2:** Im Unterschied zu V0 und V1 entstehen bei dieser Klassifizierung abtropfende Plastikpartikel, die die Watte entzünden. Die Einzelnachbrennzeiten liegen bei < 30s und die Gesamtnachbrennzeit von 5 Prüfkörpern, jeweils zweimal beflammt, bei < 250s.

**n.b.:** Der Test liefert keine Flammschutz-Klassifizierung, wenn die Nachbrennzeiten überschritten werden.

**FOT:** Flame Out Time (Nachbrennzeit), angegeben in Sekunden.

**Wärmeformbeständigkeit:**

Die Wärmeformbeständigkeit der Zusammensetzungen wurde anhand der Vicat-Erweichungstemperatur (Methode B, Prüfkraft 50N, Aufheizrate 50 K/h) an Prüfkörpern mit den Dimensionen 80 mm x 10 mm x 4 mm gemäß der ISO 306:2014-3 ermittelt.

**Wärmeleitfähigkeit:**

Die Wärmeleitfähigkeit wurde an spritzgegossenen Prüfkörpern mit den Abmaßen 60 x 60 x 2 $mm^3$ gemäß ASTM E 1461-13 (Nano Flash Methode) bestimmt. "In plane" bedeutet in x,y-Richtung gemessen.

**2. Herstellung der Probenkörper**

Die Zusammensetzungen wurden auf einem BUSS-Kneter hergestellt. Die Massetemperatur, Drehzahl, Durchsatz und Drehmoment mussten nach der für den Fachmann gängigen Vorgehensweise angepasst und auf die jeweilige Zusammensetzung abgestimmt werden. Die Füllstoffdosierung erfolgte in der Regel über den Seitenextruder. Die Prüfkörper mit den Abmessungen 60 mm x 40 mm x 4 mm wurden aus den Formmassen mittels Standard-Spritzgussverfahren bei einer Massetemperatur von 280°C und einer Werkzeugtemperatur von 80°C hergestellt.

**3. Ergebnisse**

In den nachfolgenden Tabellen bedeutet "n.g": "nicht getestet" und "n.b.": "nicht bestanden".

Wie **Tabelle 1** zeigt, wirkt sich der steigende Bisphenol TMC-Gehalt nur minimal positiv auf den CTI aus, führt allerdings zu einer schlechteren Flammwidrigkeit, was insbesondere an den Nachbrennzeiten deutlich wird, die deutlich höher liegen als bei reinem Homo-Polycarbonat (V-1). Die Wärmeleitfähigkeit reduziert sich mit steigendem Bisphenol TMC-Gehalt im getesteten Bereich nur insignifikant.

**Tabelle 1**

| | | V-1 | V-2 | V-3 | V-4 | V-5 | V-6 | V-7 | V-8 |
|---|---|---|---|---|---|---|---|---|---|
| **A-1** | [Gew.-%] | 67,0 | 57,0 | 46,5 | 36,5 | 26,2 | 16,0 | 6,0 | |
| **A-2** | [Gew.-%] | | 10,0 | 20,5 | 30,5 | 40,8 | 51,0 | 61,0 | 67,0 |
| **B-1** | [Gew.-%] | 30,0 | 30,0 | 30,0 | 30,0 | 30,0 | 30,0 | 30,0 | 30,0 |
| **E-1** | [Gew.-%] | 1,5 | 1,5 | 1,5 | 1,5 | 1,5 | 1,5 | 1,5 | 1,5 |
| **D-1** | [Gew.-%] | 0,5 | 0,5 | 0,5 | 0,5 | 0,5 | 0,5 | 0,5 | 0,5 |
| **F-1** | [Gew.-%] | 1,0 | 1,0 | 1,0 | 1,0 | 1,0 | 1,0 | 1,0 | 1,0 |
| **TMC-Gehalt** | [Gew.-%] | 0 | 10 | 20 | 30 | 40 | 50 | 60 | 66 |
| **Talk/TMC** | | 0 | 3,00 | 1,50 | 1,00 | 0,75 | 0,60 | 0,50 | 0,45 |
| **CTI** | V | 275 | 275 | 275 | 275 | 275 | 250 | 300 | 300 |
| **UL94V** | 1,5 mm 2d/7d | n.b./n.b. | n.b./n.b. | n.b./n.b. | n.b./n.b. | n.b./n.b. | n.b./n.b. | n.b./n.b. | n.b./n.b. |
| **FOT** | s | 160/181 | 213/178 | 199/208 | 211/199 | 195/208 | 208/180 | 180/180 | 184/197 |
| **UL94V** | 2 mm 2d/7d | V1/V0 | n.b./V1 | V1/V1 | n.b./n.b. | n.b./n.b. | n.b./n.b. | n.b./n.b. | n.b./n.b. |

(fortgesetzt)

| | | V-1 | V-2 | V-3 | V-4 | V-5 | V-6 | V-7 | V-8 |
|---|---|---|---|---|---|---|---|---|---|
| **FOT** | s | 67/40 | 87/70 | 103/65 | 167/70 | 185/164 | 197/259 | 183/242 | 204/155 |
| **TC, in plane** | W/(mK) | 1,1 | 1,0 | 1,1 | 1,1 | 1,0 | 0,9 | 1,0 | 0,8 |
| **Vicat** | °C | 146 | 154 | 162 | 170 | 179 | 188 | 196 | 203 |
| TMC-Gehalt: Anteil der Monomereinheiten der Formel (1a') | | | | | | | | | |

**Tabelle 2** umfasst Zusammensetzungen mit 30 Gew.-% Talk und 6-7 Gew.-% Phosphazen und stellt den Einfluss unterschiedlicher Gehalte an Bisphenol TMC auf die Vicat-Temperatur, die Flammschutzeigenschaften und den CTI dar. "FR korr." ist der korrigierte Flammschutzmittelgehalt (Komponente C) der Zusammensetzung. Es handelt sich dabei um den Quotienten aus der Menge an Phosphazen und der Menge an aromatischem Polycarbonat, multipliziert mit 100. Wie bereits in Tabelle 1 gezeigt, wirkt sich der Bisphenol TMC-Gehalt ohne zusätzlichen Flammschutz insignifikant positiv auf den CTI, aus, führt allerdings mit steigendem Wert zu einer Erhöhung der Vicat-Erweichungstemperatur, was für ein ausbalanciertes Eigenschaftsprofil essentiell ist. Unter Zugabe von Flammschutzmittel lässt sich überraschend ein etwas deutlicherer positiver Einfluss des TMC-Gehaltes auf den CTI erkennen. So hat eine Zusammensetzung ohne TMC (V-9) nur einen CTI von 275V, der mit 10-20 Gew.-% Bisphenol TMC, bezogen auf das aromatische Polycarbonat, auf 325 bis 350V (V-10, V-11) und mit 40-50 Gew.-% Bisphenol TMC auf 400V (E-12, E-13) erhöht werden kann.

Die Vicat-Wärmeformbeständigkeit steigt erwartungsgemäß mit steigendem Bisphenol TMC-Gehalt, wobei die Nachbrennzeiten steigen und die Flammwidrigkeit abnimmt.

**Tabelle 2**

| | | V-9 | V-10 | V-11 | E-12 | E-13 |
|---|---|---|---|---|---|---|
| **A-1** | [Gew.-%] | 61,0 | 14,0 | 41,8 | 23,6 | 14,5 |
| **A-2** | [Gew.-%] | | | 18,2 | 36,4 | 45,5 |
| **A-3** | [Gew.-%] | | 46,0 | | | |
| **B-1** | [Gew.-%] | 30,0 | 30,0 | 30,0 | 30,0 | 30,0 |
| **E-1** | [Gew.-%] | 1,5 | 1,5 | 1,5 | 1,5 | 1,5 |
| **D-1** | [Gew.-%] | 0,5 | 0,5 | 0,5 | 0,5 | 0,5 |
| **F-1** | [Gew.-%] | 1,0 | 1,0 | 1,0 | 1,0 | 1,0 |
| **C-1** | [Gew.-%] | 6,0 | 7,0 | 7,0 | 7,0 | 7,0 |
| **TMC-Gehalt** | [Gew.-%] | 0 | 10 | 20 | 40 | 50 |
| **FR korr.** | [Gew.-%] | 9,8 | 11,7 | 11,7 | 11,7 | 11,7 |
| **Filler/TMC** | | 0,00 | 3,00 | 1,50 | 0,75 | 0,60 |
| **Filler/FR korr./TMC** | | 0 | 0,26 | 0,13 | 0,09 | 0,05 |
| **CTI** | V | 275 | 325 | 350 | 400 | 400 |
| **UL94V** | 1,5 mm 2d/7d | V0/V0 | V0/V0 | V0/V0 | V0/V0 | V0/V0 |
| **FOT** | s | 29/19 | 15/22 | 15/24 | 41/22 | 36/36 |
| **UL94V** | 2 mm 2d/7d | V0/V0 | V0/V0 | V0/V0 | V0/V0 | V0/V0 |
| **FOT** | s | 10/10 | 13/20 | 10/22 | 27/11 | 17/29 |
| **TC, in plane** | W/(mK) | 1,1 | 1,0 | 0,9 | 1,1 | 0,9 |
| **Vicat** | °C | 129 | 126 | 131 | 143 | 151 |

**Tabelle 3** umfasst Zusammensetzungen mit 30 Gew-% Talk und 40 Gew.-%, bezogen auf das aromatische Polycarbonat, Bisphenol TMC-Monomereinheiten sowie unterschiedliche Gehalte an Phosphazen, um den Einfluss von Flammschutzmittel auf das Brandverhalten sowie den CTI und die Vicat-Temperatur darzustellen. Wie die Beispiele (V-9 bis V-21 aus Tabelle 3) zeigen, liegt eine Welchselwirkung zwischen der Menge an Flammschutzmittel mit der Menge an

Talk und dem TMC-Gehalt vor, so dass sich nur innerhalb bestimmter Grenzen die nötige Flammschutzklasse V-0 in mindestens 2 mm erreichen lässt, wobei die Vicat-Temperatur der Zielzusammensetzung möglichst hoch liegen sollte. Die Vicat-Erweichungstemperatur nimmt mit steigendem Phosphazen-Gehalt kontinuierlich ab und erreicht bei einer optimalen Zusammensetzung, bezogen auf Flammschutz und CTI, einen Wert von 132°C (E-18). Vergleicht man diese Zusammensetzung mit (V-9), so wird der vorteilhafte Einsatz von TMC in Kombination mit Phosphazen sowohl hinsichtlich Vicat-Temperatur als auch CTI deutlich. Die Wärmeleitfähigkeit aller Zusammensetzungen liegt im gewünschten Bereich von 0,9-1,1 W/(m*K).

Im Gegensatz zu Talk-gefüllten Zusammensetzungen hat die Verwendung von hohen Mengen Glasfasern (V-20) oder Quarz (V-21), ebenfalls in Kombination mit Phosphazen, keinen positiven Einfluss auf den CTI und liefert auch keine signifikant verbesserte thermische Leitfähigkeit gegenüber ungefülltem Polycarbonat.

**Tabelle 3**

| | | V-9 | V-14 | V-15 | E-16 | E-17 | E-18 | E-19 | V-20 | V-21 |
|---|---|---|---|---|---|---|---|---|---|---|
| **A-1** | [Gew.-%] | 61,0 | 25,0 | 24,4 | 23,6 | 23,2 | 22,4 | 21,7 | 23,8 | 23,8 |
| **A-2** | [Gew.-%] | | 39,0 | 37,6 | 36,4 | 35,8 | 34,6 | 33,3 | 37,2 | 37,2 |
| **B-1** | [Gew.-%] | 30,0 | 30,0 | 30,0 | 30,0 | 30,0 | 30,0 | 30,0 | | |
| **B*-2** | [Gew.-%] | | | | | | | | 30,0 | |
| **B*-3** | [Gew.-%] | | | | | | | | | 30,0 |
| **E-1** | [Gew.-%] | 1,5 | 1,5 | 1,5 | 1,5 | 1,5 | 1,5 | 1,5 | 1,5 | 1,5 |
| **D-1** | [Gew.-%] | 0,5 | 0,5 | 0,5 | 0,5 | 0,5 | 0,5 | 0,5 | 0,5 | 0,5 |
| **F-1** | [Gew.-%] | 1,0 | 1,0 | 1,0 | 1,0 | 1,0 | 1,0 | 1,0 | 1,0 | 1,0 |
| **C-1** | [Gew.-%] | 6,0 | 3,0 | 5,0 | 7,0 | 8,0 | 10,0 | 12,0 | 6,0 | 6,0 |
| **TMC-Gehalt** | [Gew.-%] | 0 | 40 | 40 | 40 | 40 | 40 | 40 | 40 | 40 |
| **FR korr.** | [Gew.-%] | 9,8 | 4,7 | 8,1 | 11,7 | 13,6 | 17,5 | 21,8 | 9,8 | 9,8 |
| **Filler/TMC** | | 0 | 0,75 | 0,75 | 0,75 | 0,75 | 0,75 | 0,75 | 0,75 | 0,75 |
| **Filler/FR korr./TMC** | | 0 | 0,16 | 0,09 | 0,06 | 0,06 | 0,05 | 0,04 | 0,03 | 0,08 |
| **CTI** | V | 275 | 325 | 325 | 400 | 500 | 575 | 400 | 225 | 200 |
| **UL94V** | 1,5 mm 2d/7d | V0/V0 | n.b./n.b. | V1/V1 | V0/V0 | V0/V0 | V0/V0 | V0/V0 | V1/V1 | V1/V1 |
| **FOT** | s | 29/19 | 180/194 | 89/67 | 41/22 | 39/14 | 24/13 | 24/14 | 87/77 | 75/49 |
| **UL94V** | 2 mm 2d/7d | V0/V0 | n.b./n.b. | V1/V1 | V0/V0 | V0/V0 | V0/V0 | V0/V0 | V0/V0 | V0/V0 |
| **FOT** | s | 10/10 | 156/159 | 70/44 | 27/11 | 24/14 | 13/7 | 22/8 | 41/47 | 18/27 |
| **TC, in plane** | W/(mK) | 1,1 | 0,9 | 1,1 | 1,1 | 1,0 | 1,0 | 0,9 | 0,3 | 0,3 |
| **Vicat** | °C | 129 | 167 | 152 | 143 | 140 | 132 | 124 | 151 | 158 |

In **Tabelle 4** sind Zusammensetzungen aus Polycarbonat mit 35 Gew.-% und 40 Gew.-% Talk mit unterschiedlichen TMC-Gehalten zusammengestellt. Auch hier lässt sich erkennen, dass Talk-Gehalt, TMC-Konzentration und Menge an Flammschutzmittel in einer Wechselwirkung stehen und nur innerhalb bestimmter Grenzen ein hoher CTI als auch gute Flammwidrigkeit erzielt werden können. Auch eine leichte Erhöhung der Konzentration des MAH-modifizierten Polymers führt zu einer weiteren Steigerung des CTI (E-24 und E-25).

Je höher der Talk-Gehalt ist, desto niedriger ist die Flammwidrigkeit, erkennbar an den hohen Nachbrennzeiten. Dieses Phänomen kann nur durch höhere Mengen Flammschutzmittel kompensiert werden (Nachbrennzeiten sinken). Da die Vicat-Erweichungstemperatur allerdings mit steigendem Gehalt an Flammschutzmittel sinkt, ist der Bisphenol TMC-Gehalt der Zusammensetzung zu ändern, um eine noch ausreichend hohe Vicat-Erweichungstemperatur von mindestens 120°C zu erhalten (V-28 und V-32).

**Tabelle 4**

| | | E-22 | E-23 | E-24 | E-25 | E-26 | V-27 | V-28 | E-29 | E-30 | V-31 | V-32 | E-33 | E-34 |
|---|---|---|---|---|---|---|---|---|---|---|---|---|---|---|
| **A-1** | [Gew.-%] | 30,0 | 28,1 | 21,9 | 21,7 | 20,5 | 19,5 | 18,3 | 18,3 | 18,3 | 12,1 | 11,3 | 11,3 | 11,3 |
| **A-2** | [Gew.-%] | 25,0 | 23,4 | 34,1 | 33,8 | 31,5 | 30,0 | 28,2 | 26,2 | 24,2 | 37,9 | 35,2 | 31,2 | 33,2 |
| **B-1** | [Gew.-%] | 35,0 | 35,0 | 35,0 | 35,0 | 35,0 | 40,0 | 40,0 | 40,0 | 40,0 | 40,0 | 40,0 | 40,0 | 40,0 |
| **E-1** | [Gew.-%] | 1,5 | 2,0 | 1,5 | 2,0 | 1,5 | 2,0 | 2,0 | 2,0 | 2,0 | 1,5 | 2,0 | 2,0 | 2,0 |
| **D-1** | [Gew.-%] | 0,5 | 0,5 | 0,5 | 0,5 | 0,5 | 0,5 | 0,5 | 0,5 | 0,5 | 0,5 | 0,5 | 0,5 | 0,5 |
| **F-1** | [Gew.-%] | 1,0 | 1,0 | 1,0 | 1,0 | 1,0 | 1,0 | 1,0 | 1,0 | 1,0 | 1,0 | 1,0 | 1,0 | 1,0 |
| **C-1** | [Gew.-%] | 7,0 | 10,0 | 6,0 | 6,0 | 10,0 | 7,0 | 10,0 | 12,0 | 14,0 | 7,0 | 10,0 | 12,0 | 14,0 |
| **TMC-Gehalt** | [Gew.-%] | 30 | 30 | 40 | 40 | 40 | 40 | 40 | 40 | 40 | 50 | 50 | 50 | 50 |
| **FR korr.** | [Gew.-%] | 12,7 | 19,4 | 10,7 | 10,8 | 19,2 | 14,1 | 21,5 | 27,0 | 32,9 | 14,0 | 21,5 | 28,2 | 31,5 |
| **Filler/TMC** | | 1,17 | 1,17 | 0,88 | 0,88 | 0,88 | 1,00 | 1,00 | 1,00 | 1,00 | 0,80 | 0,80 | 0,80 | 0,80 |
| **Filler/FR korr./TMC** | | 0,09 | 0,06 | 0,08 | 0,08 | 0,05 | 0,07 | 0,05 | 0,04 | 0,03 | 0,06 | 0,04 | 0,03 | 0,03 |
| **CTI** | V | 425 | 600 | 400 | 525 | 575 | 575 | 575 | 600 | 600 | 550 | 600 | 600 | 575 |
| **UL94V** | 1,5 mm 2d/7d | V0/V0 | V0/V0 | V1/V0 | V0/V0 | V0/V0 | n.b./n.b. | n.b./n.b. | n.b./n.b. | n.b./n.b. | n.b./n.b. | n.b./n.b. | n.b./n.b. | V1/V0 |
| **FOT** | s | 28/35 | 22/17 | 68/40 | 26/21 | 19/17 | 194/219 | 117/178 | 179/173 | 93/27 | 173/170 | 162/120 | 143/121 | 95/18 |
| **UL94V** | 2 mm 2d/7d | V0/V0 | V0/V0 | V0/V0 | V0/V0 | V0/V0 | n.b./n.b. | n.b./V0 | V0/V0 | V0/V0 | n.b./V0 | n.b./n.b. | V0/V0 | V0/V0 |
| **FOT** | s | 21/15 | 13/11 | 20/22 | 19/23 | 13/12 | 181/148 | 112/19 | 31/24 | 33/29 | 168/29 | 94/52 | 30/13 | 15/23 |
| **TC, in plane** | W/(mK) | 1,2 | 1,3 | 1,1 | 1,2 | 1,2 | 1,4 | 1,3 | 1,8 | 1,7 | 1,4 | 1,3 | 1,9 | 1,6 |
| **Vicat** | °C | 136 | 125 | 153 | 146 | 131 | 139 | 126 | 118 | 109 | 146 | 135 | 121 | 112 |

**Patentansprüche**

1. Thermoplastische Zusammensetzung, enthaltend

A) mindestens 44,5 Gew.-% aromatisches Polycarbonat, wobei das aromatische Polycarbonat eine oder mehrere Monomereinheiten der Formel (1a)

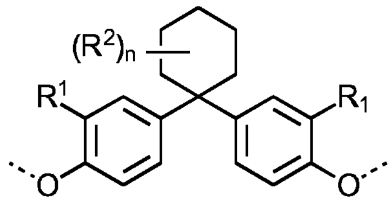

(1a)

,

in der

$R^1$ für Wasserstoff oder einen $C_1$- bis $C_4$-Alkylrest steht,
$R^2$ für einen $C_1$- bis $C_4$-Alkylrest steht,

n für 0, 1, 2 oder 3 steht,
in einem Anteil von 30 bis 65 Gew.-%, bezogen auf das Gesamtgewicht des aromatischen Polycarbonats, enthält,
B) 30 bis 40 Gew.-% Talk,
C) 6 bis 14 Gew.-% phosphorhaltiges Flammschutzmittel, wobei der Quotient aus

der Menge von Komponente C, bezogen auf die Gesamtzusammensetzung, und
der Menge aus Komponente A, bezogen auf die Gesamtzusammensetzung, multipliziert mit 100,
> 10,0 beträgt,

D) 0,3 bis 2,0 Gew.-% fluorhaltiges Antitropfmittel,
E) 1 bis 3 Gew.-% Anhydrid-modifiziertes $\alpha$-Olefin-Polymer,

wobei, wenn der Talk-Gehalt < 35,0 Gew.-% ist, der Anteil der Monomereinheiten der Formel (1a), bezogen auf das Gesamtgewicht des aromatischen Polycarbonats, mindestens 35 Gew.-% beträgt und
wobei, wenn der Talk-Gehalt > 37 Gew.-% ist, Phosphazen als phosphorhaltiges Flammschutzmittel enthalten ist und der Phosphazen-Gehalt > 10,0 Gew.-%, bezogen auf die Gesamtzusammensetzung, ist.

2. Thermoplastische Zusammensetzung nach Anspruch 1, wobei der Anteil der Monomereinheiten der Formel (1a), bezogen auf das Gesamtgewicht des aromatischen Polycarbonats, 40 bis 60 Gew.-% beträgt.

3. Thermoplastische Zusammensetzung nach Anspruch 1 oder 2, wobei der Talk-Gehalt der thermoplastischen Zusammensetzung 30 bis 35 Gew.-% beträgt.

4. Thermoplastische Zusammensetzung nach einem der vorhergehenden Ansprüche, wobei die Menge an fluorhaltigem Antitropfmittel 0,4 bis 1,0 Gew.-% beträgt.

5. Thermoplastische Zusammensetzung nach einem der vorhergehenden Ansprüche, wobei das phosphorhaltige Flammschutzmittel ein Phosphazen oder eine Mischung aus verschiedenen Phosphazenen ist.

6. Thermoplastische Zusammensetzung nach einem der vorhergehenden Ansprüche, wobei das Anhydrid-modifizierte $\alpha$-Olefin-Polymer Maleinsäureanhydrid-modifiziertes Propylen-Polymer umfasst.

7. Thermoplastische Zusammensetzung nach einem der vorhergehenden Ansprüche, wobei die Zusammensetzung

0,2 bis 2,0 Gew.-% Titandioxid enthält.

**8.** Thermoplastische Zusammensetzung nach einem der vorhergehenden Ansprüche, wobei, wenn der Talk-Gehalt < 35 Gew.-% ist, der Anteil der Monomereinheiten der Formel (1a), bezogen auf das Gesamtgewicht des aromatischen Polycarbonats, mindestens 40 Gew.-% beträgt.

**9.** Thermoplastische Zusammensetzung nach einem der vorhergehenden Ansprüche, wobei der Quotient aus der Menge von Komponente C, bezogen auf die Gesamtzusammensetzung, und der Menge aus Komponente A, bezogen auf die Gesamtzusammensetzung, multipliziert mit 100, ≥ 10,7 beträgt.

**10.** Thermoplastische Zusammensetzung nach einem der vorhergehenden Ansprüche, enthaltend

A) mindestens 50 Gew.-% aromatisches Polycarbonat, wobei der Anteil der Monomereinheiten der Formel (1a), bezogen auf das Gesamtgewicht des aromatischen Polycarbonats, 30 - 60 Gew.-% beträgt,
B) 30 bis 35 Gew.-% Talk,
C) 6 bis 12 Gew.-% phosphorhaltiges Flammschutzmittel, wobei der Quotient aus

der Menge von Komponente C, bezogen auf die Gesamtzusammensetzung, und
der Menge aus Komponente A, bezogen auf die Gesamtzusammensetzung, multipliziert mit 100,
> 10,0 beträgt,

D) 0,3 bis 2,0 Gew.-% fluorhaltiges Antitropfmittel,
E) 1 bis 3 Gew.-% Anhydrid-modifiziertes α-Olefin-Polymer,

wobei, wenn der Talk-Gehalt < 35,0 Gew.-% ist, der Anteil der Monomereinheiten der Formel (1a), bezogen auf das Gesamtgewicht des aromatischen Polycarbonats, mindestens 35 Gew.-% beträgt.

**11.** Thermoplastische Zusammensetzung nach einem der Ansprüche 1 bis 9, bestehend aus

A) mindestens 44,5 Gew.-% aromatischem Polycarbonat, wobei der Anteil der Monomereinheiten der Formel (1a), bezogen auf das Gesamtgewicht des aromatischen Polycarbonats, 30 - 65 Gew.-% beträgt,
B) 30 bis 40 Gew.-% Talk,
C) 6 bis 14 Gew.-% phosphorhaltigem Flammschutzmittel, wobei der Quotient aus

der Menge von Komponente C, bezogen auf die Gesamtzusammensetzung, und
der Menge aus Komponente A, bezogen auf die Gesamtzusammensetzung,
multipliziert mit 100,
> 10,0 beträgt,

D) 0,3 bis 2,0 Gew.-% fluorhaltigem Antitropfmittel,
E) 1 bis 3 Gew.-% Anhydrid-modifiziertem α-Olefin-Polymer,
F) optional einem oder mehreren weiteren Additiv(en), ausgewählt aus der Gruppe, bestehend aus Thermostabilisatoren, Antioxidantien, Entformungsmitteln, UV-Absorbern, IR-Absorbern, Schlagzähmodifikatoren, Antistatika, von Komponente C verschiedenen Flammschutzmitteln, optischen Aufhellern, Lichtstreumitteln, Hydrolysestabilisatoren, Umesterungsstabilisatoren, organischen Farbstoffen, organischen oder anorganischen Pigmenten, Verträglichkeitsvermittlern, Additiven zur Lasermarkierung,

wobei, wenn der Talk-Gehalt < 35,0 Gew.-% ist, der Anteil der Monomereinheiten der Formel (1a), bezogen auf das Gesamtgewicht des aromatischen Polycarbonats, mindestens 35 Gew.-% beträgt und
wobei, wenn der Talk-Gehalt > 37 Gew.-% ist, Phosphazen als phosphorhaltiges Flammschutzmittel enthalten ist und der Phosphazen-Gehalt > 10,0 Gew.-%, bezogen auf die Gesamtzusammensetzung, ist.

**12.** Formteil bestehend aus oder umfassend einen Bereich aus einer thermoplastischen Zusammensetzung nach einem der vorhergehenden Ansprüche.

**13.** Formteil nach Anspruch 12, wobei das Formteil Teil eines Hochspannungsschalters, Wechselrichters, Relais, elektronischen Verbinders, elektrischen Verbinders, Schutzschalters, einer Photovoltaikanlage, eines elektrischen Motors, eines Kühlkörpers, eines Ladegerätes oder Ladesteckers für elektrische Fahrzeuge, eines Elektroanschlusskastens, eines Smart Meter Gehäuses, eines Miniaturtrennschalters, einer Strom-Sammelschiene ist.

**14.** EE-Bauteil, umfassend

einen ersten elektrischen Leiter und einen zweiten elektrischen Leiter in einem ersten Abstand d1 und einem zweiten Abstand d2 zueinander,
welche über eine thermoplastisches Zusammensetzung nach einem der Ansprüche 1 bis 11, die in direktem Kontakt mit dem ersten elektrischen Leiter und dem zweiten elektrischen Leiter steht, verbunden sind,
wobei der Abstand d1 die kürzeste Strecke zwischen dem ersten elektrischen Leiter und dem zweiten elektrischen Leiter entlang der Oberfläche der thermoplastischen Zusammensetzung ist und
wobei der Abstand d2 die kürzeste Strecke zwischen dem ersten elektrischen Leiter und dem zweiten elektrischen Leiter durch die Luft ist,
wobei d2 so ausgewählt ist, dass bei der jeweiligen Betriebsspannung ein Überschlag durch die Luft verhindert wird und
wobei d1 bei der nachfolgend aufgelisteten Betriebsspannung U beträgt:

dli(0V $\leq$ U $\leq$ 250V): 1,8 mm bis < 2,5 mm
dli(250 V < U $\leq$ 500 V) = 3,6 mm bis < 5,0 mm
dliii(500 V < U $\leq$ 1000 V) = 7,1 mm bis < 10,0 mm.

**15.** EE-Bauteil nach Anspruch 14, wobei das EE-Bauteil eine Schutzart IP6K9K nach ISO 20653:2013-02 aufweist.

**Claims**

**1.** Thermoplastic composition, containing

A) at least 44.5% by weight of aromatic polycarbonate, wherein the aromatic polycarbonate contains one or more monomer units of formula (1a)

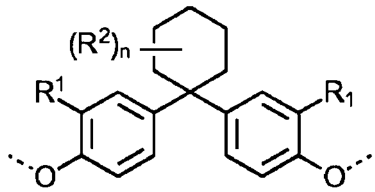

(1a)

,

in which

$R^1$ is hydrogen or a $C_1$- to $C_4$-alkyl radical,
$R^2$ is a $C_1$- to $C_4$-alkyl radical,
n is 0, 1, 2 or 3,
in a proportion of 30% to 65% by weight, based on the total weight of the aromatic polycarbonate,

B) 30% to 40% by weight of talc,
C) 6% to 14% by weight of phosphorus-containing flame retardant, wherein the quotient of

the amount of component C, based on the overall composition, and
the amount of component A, based on the overall composition, multiplied by 100,
is > 10.0,

D) 0.3% to 2.0% by weight of fluorine-containing anti-drip agent,
E) 1% to 3% by weight of anhydride-modified $\alpha$-olefin polymer,

wherein, if the talc content is < 35.0% by weight, the proportion of monomer units of formula (1a), based on the total weight of the aromatic polycarbonate, is at least 35% by weight and
wherein, if the talc content is > 37% by weight, phosphazene is present as phosphorus-containing flame retardant and the phosphazene content is > 10.0% by weight, based on the overall composition.

**2.** Thermoplastic composition according to Claim 1, wherein the proportion of monomer units of formula (1a), based on the total weight of the aromatic polycarbonate, is 40% to 60% by weight.

**3.** Thermoplastic composition according to Claim 1 or 2, wherein the talc content of the thermoplastic composition is 30% to 35% by weight.

**4.** Thermoplastic composition according to any of the preceding claims, wherein the amount of fluorine-containing anti-drip agent is 0.4% to 1.0% by weight.

**5.** Thermoplastic composition according to any of the preceding claims, wherein the phosphorus-containing flame retardant is a phosphazene or a mixture of different phosphazenes.

**6.** Thermoplastic composition according to any of the preceding claims, wherein the anhydride-modified $\alpha$-olefin polymer comprises maleic anhydride-modified propylene polymer.

**7.** Thermoplastic composition according to any of the preceding claims, wherein the composition contains 0.2% to 2.0% by weight of titanium dioxide.

**8.** Thermoplastic composition according to any of the preceding claims, wherein, if the talc content is < 35% by weight, the proportion of monomer units of formula (1a), based on the total weight of the aromatic polycarbonate, is at least 40% by weight.

**9.** Thermoplastic composition according to any of the preceding claims, wherein the quotient of the amount of component C, based on the overall composition, and the amount of component A, based on the overall composition, multiplied by 100, is ≥ 10.7.

**10.** Thermoplastic composition according to any of the preceding claims, containing

A) at least 50% by weight of aromatic polycarbonate, wherein the proportion of monomer units of formula (1a), based on the total weight of the aromatic polycarbonate, is 30-60% by weight,
B) 30% to 35% by weight of talc,
C) 6% to 12% by weight of phosphorus-containing flame retardant, wherein the quotient of

the amount of component C, based on the overall composition, and
the amount of component A, based on the overall composition, multiplied by 100,
is > 10.0,

D) 0.3% to 2.0% by weight of fluorine-containing anti-drip agent,
E) 1% to 3% by weight of anhydride-modified $\alpha$-olefin polymer,

wherein, if the talc content is < 35.0% by weight, the proportion of monomer units of formula (1a), based on the total weight of the aromatic polycarbonate, is at least 35% by weight.

**11.** Thermoplastic composition according to any of Claims 1 to 9, consisting of

A) at least 44.5% by weight of aromatic polycarbonate, wherein the proportion of monomer units of formula (1a), based on the total weight of the aromatic polycarbonate, is 30-65% by weight,
B) 30% to 40% by weight of talc,
C) 6% to 14% by weight of phosphorus-containing flame retardant, wherein the quotient of

the amount of component C, based on the overall composition, and
the amount of component A, based on the overall composition, multiplied by 100,
is > 10.0,

D) 0.3% to 2.0% by weight of fluorine-containing anti-drip agent,
E) 1% to 3% by weight of anhydride-modified $\alpha$-olefin polymer,
F) optionally one or more further additive(s), selected from the group consisting of heat stabilizers, antioxidants, mould-release agents, UV absorbers, IR absorbers, impact modifiers, antistats, flame retardants different from component C, optical brighteners, light-scattering agents, hydrolysis stabilizers, transesterification stabilizers, organic dyes, organic or inorganic pigments, compatibilizers, additives for laser marking,

wherein, if the talc content is < 35.0% by weight, the proportion of monomer units of formula (1a), based on the total weight of the aromatic polycarbonate, is at least 35% by weight and
wherein, if the talc content is > 37% by weight, phosphazene is present as phosphorus-containing flame retardant and the phosphazene content is > 10.0% by weight, based on the overall composition.

**12.** Moulding consisting of, or comprising a region made from, a thermoplastic composition according to any of the preceding claims.

**13.** Moulding according to Claim 12, wherein the moulding is part of a high-voltage switch, inverter, relay, electronic connector, electrical connector, circuit breaker, a photovoltaic system, an electric motor, a heat sink, a charger or charging plug for electric vehicles, an electrical junction box, a smart meter housing, a miniature circuit breaker, a busbar.

**14.** EE component, comprising

a first electrical conductor and a second electrical conductor at a first distance d1 and a second distance d2 with respect to one another,
which are connected via a thermoplastic composition according to any of Claims 1 to 11, which is in direct contact with the first electrical conductor and the second electrical conductor,
wherein the distance d1 is the shortest distance between the first electrical conductor and the second electrical conductor along the surface of the thermoplastic composition and
wherein the distance d2 is the shortest distance between the first electrical conductor and the second electrical conductor through the air,
wherein d2 is selected in such a way that at the respective operating voltage a sparkover through the air is prevented and
wherein d1, at the operating voltage U listed below, is:

dli(0 V $\leq$ U $\leq$ 250 V): 1.8 mm to < 2.5 mm
dli(250 V < U $\leq$ 500 V) = 3.6 mm to < 5.0 mm
dliii(500 V < U $\leq$ 1000 V) = 7.1 mm to < 10.0 mm.

**15.** EE component according to Claim 14, wherein the EE component has an IP6K9K degree of protection according to ISO 20653:2013-02.

## Revendications

**1.** Composition thermoplastique, contenant

A) au moins 44,5 % en poids de polycarbonate aromatique, le polycarbonate aromatique contenant une ou plusieurs unités monomères de formule (1a)

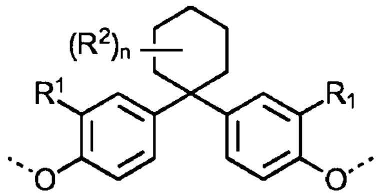

(1a)

dans laquelle

$R^1$ représente l'hydrogène ou un radical alkyle en $C_1$ à $C_4$,
$R^2$ représente un radical alkyle en $C_1$ à $C_4$,
n représente 0, 1, 2 ou 3,
dans une proportion de 30 à 65 % en poids par rapport au poids total du polycarbonate aromatique,

B) 30 à 40 % en poids de talc,
C) 6 à 14 % en poids d'un agent ignifuge contenant du phosphore, le quotient de

la quantité de composant C par rapport à la composition totale, et
de la quantité de composant A par rapport à la composition totale, multiplié par 100,
étant > 10,0,

D) 0,3 à 2,0 % en poids d'un agent anti-goutte contenant du fluor,
E) 1 à 3 % en poids de polymère d'$\alpha$-oléfine modifié par un anhydride,

dans laquelle, lorsque la teneur en talc est < 35,0 % en poids, la proportion d'unités monomères de formule (1a), par rapport au poids total du polycarbonate aromatique, est d'au moins 35 % en poids, et
dans laquelle, lorsque la teneur en talc est > 37 % en poids, du phosphazène est contenu en tant qu'agent ignifuge contenant du phosphore et la teneur en phosphazène est > 10,0 % en poids par rapport à la composition totale.

**2.** Composition thermoplastique selon la revendication 1, dans laquelle la proportion des unités monomères de formule (1a), par rapport au poids total du polycarbonate aromatique, est de 40 à 60 % en poids.

**3.** Composition thermoplastique selon la revendication 1 ou 2, dans laquelle la teneur en talc de la composition thermoplastique est de 30 à 35 % en poids.

**4.** Composition thermoplastique selon l'une quelconque des revendications précédentes, dans laquelle la quantité d'agent anti-goutte contenant du fluor est de 0,4 à 1,0 % en poids.

**5.** Composition thermoplastique selon l'une quelconque des revendications précédentes, dans laquelle l'agent ignifuge contenant du phosphore est un phosphazène ou un mélange de différents phosphazènes.

**6.** Composition thermoplastique selon l'une quelconque des revendications précédentes, dans laquelle le polymère d'$\alpha$-oléfine modifié par un anhydride comprend un polymère de propylène modifié par un anhydride maléique.

**7.** Composition thermoplastique selon l'une quelconque des revendications précédentes, la composition contenant 0,2 à 2,0 % en poids de dioxyde de titane.

**8.** Composition thermoplastique selon l'une quelconque des revendications précédentes, dans laquelle, lorsque la teneur en talc est < 35 % en poids, la proportion d'unités monomères de formule (1a), par rapport au poids total du polycarbonate aromatique, est d'au moins 40 % en poids.

**9.** Composition thermoplastique selon l'une quelconque des revendications précédentes, dans laquelle le quotient de la quantité de composant C, par rapport à la composition totale, et de la quantité de composant A, par rapport à la composition totale, multiplié par 100, est $\geq$ 10,7.

**10.** Composition thermoplastique selon l'une quelconque des revendications précédentes, contenant

A) au moins 50 % en poids de polycarbonate aromatique, la proportion des unités monomères de formule (1a), par rapport au poids total du polycarbonate aromatique, étant de 30 à 60 % en poids,
B) 30 à 35 % en poids de talc,
C) 6 à 12 % en poids d'un agent ignifuge contenant du phosphore, le quotient de

la quantité de composant C par rapport à la composition totale, et
de la quantité de composant A par rapport à la composition totale, multiplié par 100,
étant > 10,0,

D) 0,3 à 2,0 % en poids d'un agent anti-goutte contenant du fluor,
E) 1 à 3 % en poids de polymère d'$\alpha$-oléfine modifié par un anhydride,

dans laquelle, lorsque la teneur en talc est < 35,0 % en poids, la proportion d'unités monomères de formule (1a), par rapport au poids total du polycarbonate aromatique, est d'au moins 35 % en poids.

**11.** Composition thermoplastique selon l'une quelconque des revendications 1 à 9, constituée par

A) au moins 44,5 % en poids de polycarbonate aromatique, la proportion des unités monomères de formule (1a), par rapport au poids total du polycarbonate aromatique, étant de 30 à 65 % en poids,
B) 30 à 40 % en poids de talc,
C) 6 à 14 % en poids d'un agent ignifuge contenant du phosphore, le quotient de

la quantité de composant C par rapport à la composition totale, et
de la quantité de composant A par rapport à la composition totale, multiplié par 100,
étant > 10,0,

D) 0,3 à 2,0 % en poids d'un agent anti-goutte contenant du fluor,
E) 1 à 3 % en poids de polymère d'$\alpha$-oléfine modifié par un anhydride,
F) facultativement, un ou plusieurs additifs supplémentaires choisis dans le groupe constitué par les stabilisants thermiques, les antioxydants, les agents de démoulage, les absorbeurs d'UV, les absorbeurs d'IR, les modificateurs de résistance au choc, les agents antistatiques, les agents ignifuges autres que ceux du composant C, les azurants optiques, les agents de diffusion de la lumière, les stabilisateurs d'hydrolyse, stabilisateurs de transestérification, les colorants organiques, les pigments organiques ou inorganiques, les promoteurs de compatibilité, les additifs pour le marquage laser,

dans laquelle, lorsque la teneur en talc est < 35,0 % en poids, la proportion d'unités monomères de formule (1a), par rapport au poids total du polycarbonate aromatique, est d'au moins 35 % en poids, et
dans laquelle, lorsque la teneur en talc est > 37 % en poids, du phosphazène est contenu en tant qu'agent ignifuge contenant du phosphore et la teneur en phosphazène est > 10,0 % en poids par rapport à la composition totale.

**12.** Pièce moulée constituée ou comprenant une zone d'une composition thermoplastique selon l'une quelconque des revendications précédentes.

**13.** Pièce moulée selon la revendication 12, la pièce moulée faisant partie d'un interrupteur haute tension, d'onduleur, d'un relais, d'un connecteur électronique, d'un connecteur électrique, d'un disjoncteur, d'une installation photovoltaïque, d'un moteur électrique, d'un dissipateur thermique, d'un chargeur ou d'une prise de charge pour véhicules électriques, d'une boîte de jonction électrique, d'un boîtier de compteur intelligent, d'un sectionneur miniature, d'une barre omnibus.

**14.** Composant EE, comprenant

un premier conducteur électrique et un deuxième conducteur électrique à une première distance d1 et à une seconde distance d2 l'un de l'autre,
qui sont reliés par l'intermédiaire d'une composition thermoplastique selon l'une quelconque des revendications 1 à 11, qui est en contact direct avec le premier conducteur électrique et le deuxième conducteur électrique,

la distance d1 étant le chemin le plus court entre le premier conducteur électrique et le second conducteur électrique le long de la surface de la composition thermoplastique et
la distance d2 étant le chemin le plus court entre le premier conducteur électrique et le deuxième conducteur électrique à travers l'air,
d2 étant choisi de telle sorte qu'à la tension de fonctionnement respective, un contournement par l'air est évité, et d1 valant, à la tension de fonctionnement U listée ci-dessous :

dli(0 V ≤ U ≤ 250 V) : 1,8 mm à < 2,5 mm
d1i(250 V < U ≤ 500 V) = 3,6 mm à < 5,0 mm
dliii(500 V < U ≤ 1000 V) = 7,1 mm à < 10,0 mm.

**15.** Composant EE selon la revendication 14, le composant EE présentant un indice de protection IP6K9K selon la norme ISO 20653:2013-02.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2018037037 A1
- WO 2020212245 A1
- US 3028635 A
- US 2999835 A
- US 3148172 A
- US 2991273 A
- US 3271367 A
- US 4982014 A
- US 2999846 A
- DE 1570703 A
- DE 2063050 A
- DE 2036052 A
- DE 2211956 A
- DE 3832396 A
- FR 1561518 A
- JP 61062039 A
- JP 61062040 A
- JP 61105550 A
- DE 3918406 A1
- EP 0363608 A1
- EP 0640655 A2
- EP 728811 A2
- DE 1961668 A
- WO 9740092 A1
- US 3671487 A
- US 3723373 A
- US 3838092 A
- US 2393967 A
- EP 0839623 A1
- WO 9615102 A1
- EP 0500496 A1


### In der Beschreibung aufgeführte Nicht-Patentliteratur


- **F. ACQUASANTA et al.** *Polymer Degradation and Stability*, 2011, vol. 96, 2098-2103
- Chemistry and Physics of Polycarbonates. **SCHNELL**. Polymer Reviews. Interscience Publishers, 1964, vol. 9
- Polycarbonates. **D. FREITAG** ; **U. GRIGO** ; **P.R. MÜLLER** ; **H. NOUVERTNÉ** ; **BAYER AG**. Encyclopedia of Polymer Science and Engineering. 1988, vol. 11, 648-718
- Polycarbonate. **U. GRIGO** ; **K. KIRCHNER** ; **P.R. MÜLLER**. Polycarbonate, Polyacetale, Polyester, Celluloseester. Carl Hanser Verlag, 1992, vol. 3/1, 117-299
- **H. SCHNELL**. Chemistry and Physics of Polycarbonates. Interscience Publishers, 1964
- **Z.B**. *Ullmanns Enzyklopädie der technischen Chemie*, 1979, vol. 18, 301
- **HOUBEN-WEYL**. *Methoden der organischen Chemie*, vol. 12/1, 43
- **VON SCHILDKNECHT**. Vinyl and Related Polymers. John Wiley & Sons, Inc., 1962, 484-494
- **VON WALL**. Fluorpolymers. Wiley-Interscience, John Wiley & Sons, Inc, 1970, vol. 13, 623-654
- Modern Plastics Encyclopedia. Mc Graw-Hill, Inc., October 1970, vol. 47, 134, 774
- Modern Plastics Encyclopedia. Mc Graw-Hill, Inc., October 1975, vol. 52, 27, 28, 472
- **HANS ZWEIFEL**. Plastics Additives Handbook. Hanser Verlag, 2000
- *CHEMICAL ABSTRACTS*, 6683-19-8